(19) Europäisches Patentamt
European Patent Office
Office européen des brevets

(11) **EP 4 131 102 B1**

(12) **EUROPEAN PATENT SPECIFICATION**

(45) Date of publication and mention
of the grant of the patent:
**29.04.2026 Bulletin 2026/18**

(51) International Patent Classification (IPC):
***G06Q 10/0639*** *(2023.01)*     ***G06Q 50/40*** *(2024.01)*
***G06Q 10/08*** *(2024.01)*      ***G06Q 10/0832*** *(2023.01)*
***B60P 3/20*** *(2006.01)*

(21) Application number: **21780581.1**

(22) Date of filing: **30.03.2021**

(52) Cooperative Patent Classification (CPC):
**G06Q 10/08; G06Q 10/06395; G06Q 10/0832;**
**B60P 3/20**

(86) International application number:
**PCT/JP2021/013558**

(87) International publication number:
**WO 2021/200956 (07.10.2021 Gazette 2021/40)**

(54) **ADJUSTING SYSTEM, AND ADJUSTING METHOD**

EINSTELLSYSTEM UND EINSTELLVERFAHREN

SYSTÈME D'AJUSTEMENT ET PROCÉDÉ D'AJUSTEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.03.2020 JP 2020065236**

(43) Date of publication of application:
**08.02.2023 Bulletin 2023/06**

(73) Proprietor: **Daikin Industries, Ltd.**
**Osaka-shi, Osaka 530-0001 (JP)**

(72) Inventors:
• **SATOU, Kiichirou**
**Osaka-shi, Osaka 530-8323 (JP)**
• **TANNO, Shouichi**
**Osaka-shi, Osaka 530-8323 (JP)**
• **MATSUI, Hidenori**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(56) References cited:
JP-A- 2012 003 743     JP-A- 2014 531 815
JP-A- 2018 092 434     JP-A- 2019 516 162
US-A1- 2011 029 413    US-A1- 2014 055 244
US-A1- 2016 063 433

## Description

Technical Field

The present disclosure relates to an adjustment system and an adjustment method.

Background Art

Patent Literature 1 discloses a system including: a storage device to store parameters associated with the goods of a distribution chain, the storage device storing historical parameters for other goods, at least one of the parameters being received from a transport refrigeration system; and a parameter management system coupled to the storage device.

Patent Literature 2 describes a method for a shipment data logger are described. The shipment data logger receives shipping condition parameters and instructions and generates generate shipping handling data based on sensors in the shipment data logger. The shipment data logger is configured to provide authorized access to the shipping handling data. The shipping handling data is analyzed relative to the shipping condition parameters to generate a delivery recommendation.

Patent Literature 3 describes a condition monitoring system including a radio frequency transponder module including an RFID chip having a first memory, and an antenna; at least one sensor module that monitors data related to the condition of a product and includes a second memory for storing the monitored data; and a communication interface that couples the at least one sensor module to the RFID chip of the radio frequency transponder module so that the sensor module is operative to communicate with the RFID chip by way of the communication interface and the RFID chip first memory is operative to store data related to the product.

Patent Literature 4 describes a system for managing perishables in a supply chain, including at least one sensor module adapted to sense at least one parameter of at least one monitorable shipping unit of perishables through multiple stages in a supply chain, a plurality of sensed inputs integrator and communicators (SIICs), each communicating with the least one sensor module at least one different one of the multiple stages in the supply chain, for receiving information relating to the at least one parameter, a perishable lifecycle manager (PLM) communicating with at least some of the plurality of SIICs and a user interface providing to a user an indication of at least one of remaining lifetime prediction, supply chain link accountability and first expired, first out logistics outputs relating to the at least one monitorable shipping unit of perishables whose at least one parameter is sensed by the at least one sensor module.

Citation List

Patent Literature

Patent Literature 1: Japanese Unexamined Patent Application Publication (Translation of PCT Application) No. 2019-516162
Patent Literature 2: US 2016/063433 A1
Patent Literature 3: US 2014/055244 A1
Patent Literature 4: US 2011/029413 A1

Summary of Invention

Technical Problem

In an information processing system, two identification units each capable of identifying information about a condition of perishable products may identify a condition of the perishable products at different times. If the condition of the perishable products identified by each identification unit is at variance with each other due to, for example, differences in individual characteristics of the identification units, it may be difficult to manage the condition of the perishable products based on their condition identified at different times by the two identification units.

It is an object of the present disclosure is to facilitate management of the condition of perishable products based on their condition identified at different times by different identification units.

Solution to Problem

This object is accomplished by the adjustment system of claim 1 and the adjustment method of claim 10. The dependent claims concern particular embodiments.

Brief Description of Drawings

FIG. 1 shows an example of a perishable product management system of a first embodiment.
FIG. 2 shows a hardware configuration of a server.
FIG. 3 shows a functional configuration of the server.
FIG. 4 shows a condition information management table.
FIG. 5 shows a rating management table.
FIG. 6 is a flowchart of an adjustment process.
FIG. 7A shows an adjustment factor management table, and FIG. 7B shows a freshness notification screen.
FIG. 8 shows a perishable product management system of a second embodiment.
FIG. 9 shows a condition information management table of the second embodiment.
FIG. 10 is a flowchart of an adjustment process of the second embodiment.
FIG. 11A shows an adjustment factor management table of the second embodiment, and FIG. 7B shows a freshness notification screen of the second embodiment.
FIG. 12 shows a perishable product management system of a third embodiment.
FIG. 13 shows a condition information management table of the third embodiment.
FIG. 14A shows a perishable product correspondence management table, and FIG. 14B shows a sensor correspondence management table.
FIG. 15 is a flowchart of an adjustment process of the third embodiment.
FIG. 16 is a graph showing freshness of a perishable product identified from latest condition information and from condition information to be adjusted.

Description of Embodiments

<First Embodiment>

A first embodiment is described below with reference to the attached drawings.

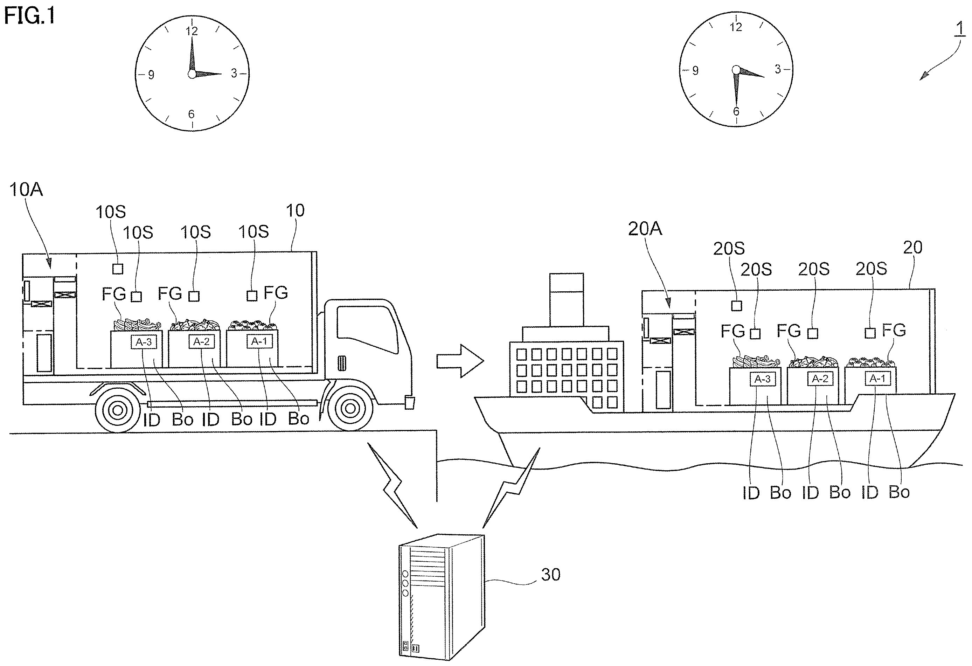

FIG. 1 shows an example of a perishable product management system 1 of the present embodiment.
The perishable product management system 1, which is an example of the adjustment system, allows a user to manage a condition of perishable products by identifying the condition of the perishable products and notifying the user of information about the identified condition of the perishable products. Perishable products refer to items whose freshness changes over time.
The perishable product management system 1 includes a land container 10, a sea container 20, and a server 30. The land container 10 and the server 30, and the sea container 20 and the server 30 are connected via a network.
The land container 10, which is an example of the accommodation unit, contains perishable products and is transported overland. The land container 10 of the present embodiment is loaded on a truck or any other transportation means and transported overland. The land container 10 is provided with an air conditioner 10A, multiple perishable products FG, and multiple land-based sensors 10S.
The air conditioner 10A conditions the air inside the land container 10. The air conditioner 10A controls the temperature and humidity inside the land container 10.
The perishable products FG of the present embodiment are sorted by type inside the land container 10. In the shown example, multiple tomatoes, each of which is a perishable product FG, multiple cabbages, each of which is a perishable product FG, and multiple bunches of bananas, each of which is a perishable product FG, are contained in different boxes Bo. Also, each box Bo is provided with identification information ID for identifying corresponding perishable products FG. In the shown example, the box Bo containing tomatoes is provided with identification information ID "A-1," the box Bo containing cabbages is provided with identification information ID "A-2," and the box Bo containing bananas is provided with identification information ID "A-3." The perishable products FG contained in each box Bo are identified from the corresponding identification information ID. It should be noted that different identification information ID may be provided for each perishable product FG.
In the present embodiment, the perishable products FG are transported overland in a refrigerated state as the air conditioner 10A cools the interior of the land container 10.
The land-based sensor 10S, which is an example of the identification unit, identifies a condition of the perishable products FG contained in the land container 10 and generates information indicative of the identified condition of the perishable products FG. The information generated by the sensor as information indicative of a condition of the perishable products FG is hereinafter referred to as condition information.

Examples of the sensor that identifies a condition of the perishable products FG include a freshness sensor that identifies freshness of the perishable products FG. Examples of the freshness sensor include an odor sensor that identifies the freshness of the perishable products FG based on their odor, a color sensor that identifies the freshness of the perishable products FG based on their color, and a sugar level sensor that identifies the freshness of the perishable products FG based on their sugar level. Further examples of the freshness sensor include an acidity sensor that identifies the freshness of the perishable products FG based on their acidity, a hardness sensor that identifies the freshness of the perishable products FG based on their hardness, a water content sensor that identifies the freshness of the perishable products FG based on the water content therein. Further examples of the freshness sensor include a ripeness sensor that identifies the freshness of the perishable products FG based on their ripeness and a biosensor that identifies the freshness of the perishable products FG based on the amount of bacteria generated therefrom. A temperature sensor that detects temperature, a humidity sensor that detects humidity, and a gas sensor that detects gas concentration may also be used as the freshness sensor. Examples of the gas concentration to be detected by the gas sensor include oxygen concentration, carbon dioxide concentration, nitrogen concentration, and ethylene concentration.

The land-based sensor 10S identifies the condition of the perishable products FG and generates the condition information at predetermined time intervals. The predetermined time interval may be any interval. Every time the land-based sensor 10S generates the condition information, the land-based sensor 10S transmits the generated condition information to the server 30 along with time information indicative of a time when the condition of the perishable products FG was identified, the identification information ID identifying the relevant perishable products FG, and sensor identification information (not shown) identifying the land-based sensor 10S.

The sea container 20, which is an example of the accommodation unit, contains the perishable products FG and is transported by sea. The sea container 20 is loaded on a ship or other transportation means and transported by sea.

In the present embodiment, the perishable products FG are transported overland in the land container 10 and then transferred from the land container 10 to the sea container 20 to be transported by sea in the sea container 20. Accordingly, a time at which the perishable products FG are being transported overland differs from a time at which the perishable products FG are being transported by sea.

The sea container 20 is provided with an air conditioner 20A, multiple perishable products FG, and multiple sea-based sensors 20S.

The air conditioner 20A conditions the air inside the sea container 20. The air conditioner 20A controls the temperature and humidity inside the sea container 20.

The perishable products FG and boxes Bo contained in the sea container 20 are the same perishable products FG and boxes Bo that were contained in the land container 10.

The sea-based sensor 20S, which is an example of the identification unit, identifies a condition of the perishable products FG contained in the sea container 20 and generates information indicative of the identified condition of the perishable products FG. The sea-based sensor 20S may be of the same type as the land-based sensor 10S, or may be of a different type than the land-based sensor 10S.

The sea-based sensor 20S identifies the condition of the perishable products FG and generates the condition information at predetermined time intervals. The predetermined time interval may be any interval. Every time the sea-based sensor 20S generates the condition information, the sea-based sensor 20S transmits the generated condition information to the server 30 along with time information indicative of a time when the condition of the perishable products FG was identified, the identification information ID identifying the relevant perishable products FG, and sensor identification information (not shown) identifying the sea-based sensor 20S.

Although four land-based sensors 10S and four sea-based sensors 20S are provided in the shown example, the number of land-based sensors 10S and sea-based sensors 20S is not limited to that of the shown example. The number of land-based sensors 10S provided in the land container 10 and the number of sea-based sensors 20S provided in the sea container 20 may be more than or less than four. The land-based sensors 10S and sea-based sensors 20S may be collectively referred to as sensors unless the distinction is needed for the purposes of description.

The transportation means on which the land container 10 or the sea container 20 is loaded is provided with a power source (not shown), and the equipment of the land container 10 or the equipment of the sea container 20 operates with power supplied from the power source. The perishable product management system 1 is also provided with a reserve battery (not shown). Even when the perishable products FG and the sensors are being removed from the land container 10 or the sea container 20, the sensors can continue to identify the condition of the perishable products FG by receiving power from the reserve battery.

Upon acquiring the condition information from the land-based sensor 10S, the server 30 of the present embodiment presents the acquired condition information. Also, upon acquiring the condition information from the sea-based sensor 20S, the server 30 adjusts the condition information acquired from the sea-based sensor 20S according to the condition information acquired from the land-based sensor 10S. More specifically, the server 30 adjusts the condition information acquired from the sea-based sensor 20S so that the user can understand an initial identified condition of the perishable products FG identified by the sea-based sensor 20S to be the same as a last identified condition of the perishable products FG identified by the land-based sensor 10S. The server 30 presents the adjusted condition information.

For example, the server 30 is implemented by a computer. The server 30 may be implemented by a single computer or by distributed processing using multiple computers.

The condition information may be raw data identified by the sensor, or may be data processed to be indicative of the condition of the perishable products FG based on the raw data. **In** cases where the condition information is raw data, the server 30 may use the raw data to generate, from the condition information, processed data indicative of the condition of perishable products FG.

The network used for connection between the land container 10 and the server 30 and between the sea container 20 and the server 30 may be any type of network that enables data exchange therebetween, and may be the Internet, a local area network (LAN), a wide area network (WAN), etc. A configuration is also possible where these devices are connected over multiple networks and via multiple communication lines.

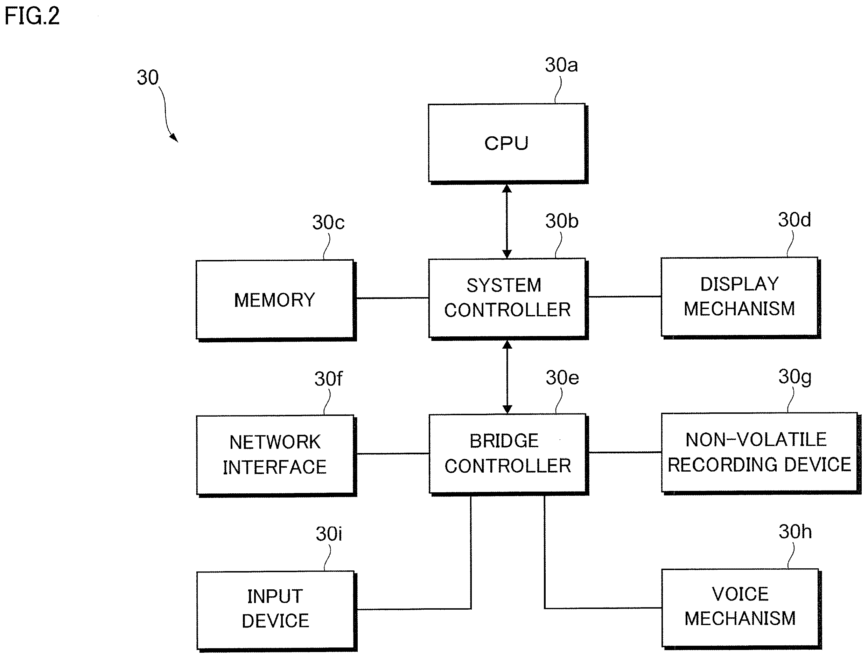

FIG. 2 shows a hardware configuration of the server 30.

As shown in FIG. 2, the server 30 includes a central processing unit (CPU) 30a as a computing unit and a memory 30c as a main storage unit. The device further includes external devices including a non-volatile recording device 30g, a network interface 30f, a display mechanism 30d, a voice mechanism 30h, and input devices 30i such as a keyboard and a mouse.

The memory 30c and the display mechanism 30d are connected to the CPU 30a via a system controller 30b. Also, the network interface 30f, the non-volatile recording device 30g, the voice mechanism 30h, and the input devices 30i are connected to the system controller 30b via a bridge controller 30e. Each component is connected by various buses including system and input/output buses.

The non-volatile recording device 30g stores a program for implementing each function. Various functions are implemented as this program is loaded onto the memory 30c and the CPU 30a executes the processing based on the program. Examples of the non-volatile recording device 30g include semiconductor memories such as a solid state drive (SSD) and magnetic disk devices such as a hard disk drive (HDD).

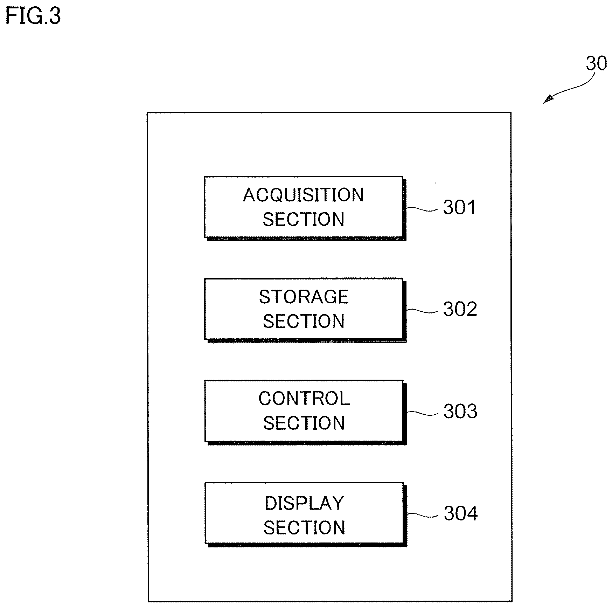

FIG. 3 shows a functional configuration of the server 30.

The server 30 of the present embodiment includes an acquisition section 301, a storage section 302, a control section 303, and a display section 304.

The acquisition section 301, which is an example of the acquisition unit, acquires the condition information from the sensors.

The storage section 302 stores the condition information acquired by the acquisition section 301. The information stored in the storage section 302 is detailed below.

The control section 303, which is an example of the adjustment unit, uses the condition information transmitted from the land-based sensor 10S to the server 30 to adjust the condition information transmitted from the sea-based sensor 20S. More specifically, the control section 303 adjusts the condition information from the sea-based sensor 20S so as to reduce difference between the freshness of the perishable products FG identified based on the condition information from the sea-based sensor 20S and the freshness of the perishable products FG identified based on the condition information from the land-based sensor 10S. In other words, the control section 303 adjusts the condition information from the sea-based sensor 20S so as to reduce variance between the freshness identified based on the condition information from the sea-based sensor 20S and the freshness identified based on the condition information from the land-based sensor 10S.

Also, the control section 303 instructs the display section 304 to display, on the display mechanism 30d, the condition information transmitted from the land-based sensor 10S and the condition information transmitted from the sea-based sensor 20S.

In response to the information display instruction from the control section 303, the display section 304 displays, on the display mechanism 30d, the relevant information to which the instruction pertains.

(Storage contents of the storage section 302)

The information stored in the storage section 302 is now described.

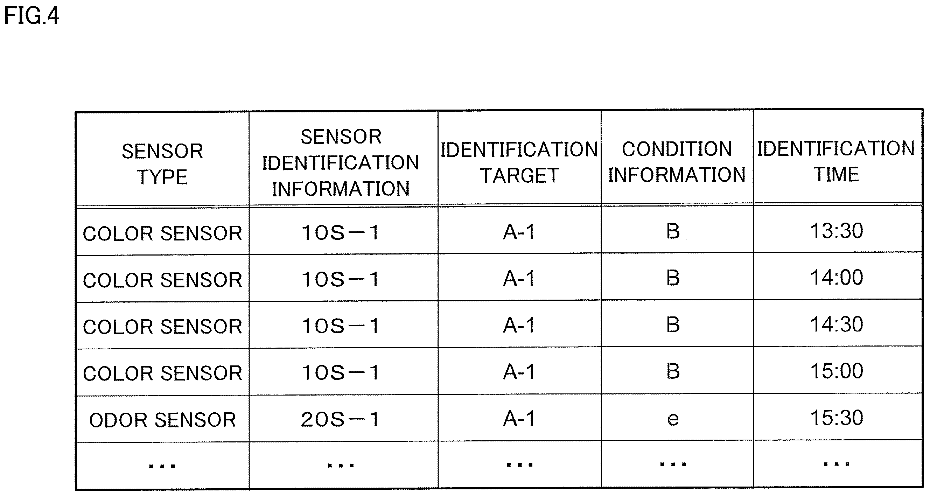

FIG. 4 shows a condition information management table. The condition information management table is used to manage the condition information. The condition information management table is stored in the storage section 302.

The "sensor type" items in the condition information management table represent the types of sensors. In the shown example, the "sensor type" items include the items "color sensor," "odor sensor," etc.

The "sensor identification information" items in the condition information management table represent the information for identifying the sensors. In the shown example, the "sensor identification" items include the items "10S-1" and "20S-1." The item "10S-1" represents a sensor is one of the multiple land-based sensors 10S. The item "20S-1" represents a sensor that is one of the multiple sea-based sensors 20S.

Also, the "identification target" items in the condition information management table represent the identification information IDs (see FIG. 1). Each "identification target" represents the identification information ID of the perishable products FG whose condition was identified by the corresponding sensor listed in the "sensor identification" column.

Also, the "condition information" items in the condition information management table represent the condition information generated by the respective sensors.

Also, the "identification time" items in the condition information management table represent the times at which the condition of the perishable products FG shown in the "condition information" column was identified by the respective sensors.

Upon the acquisition section 301 acquiring the "condition information" transmitted from the sensors, this "condition information" and the "sensor type," "sensor identification information," "identification target," and "identification time" information related to this "condition information" are stored in the storage section 302 in association with one another.

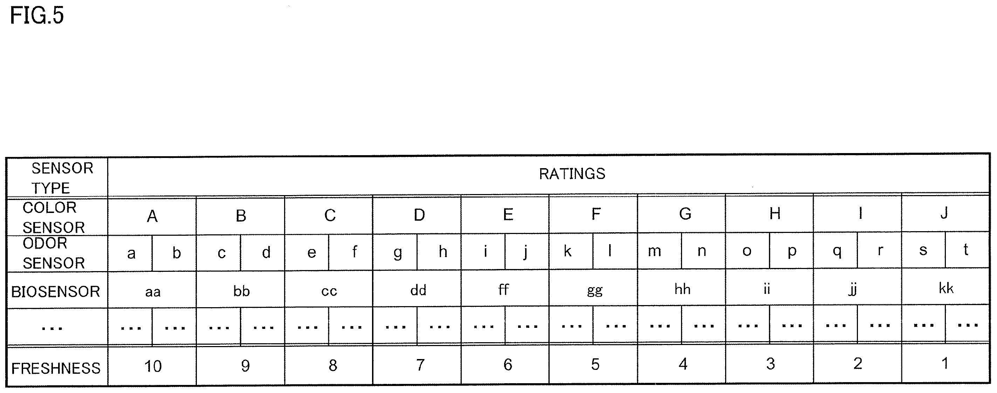

FIG. 5 shows a rating management table. The rating management table is used to manage ratings of the condition of the perishable products FG. The rating management table is stored in the storage section 302.

The "sensor type" items in the rating management table represent the types of sensors. In the shown example, the "sensor type" items include the items "color sensor," "odor sensor," "biosensor," etc.

The "ratings" items in the rating management table represents the ratings of the condition of the perishable products FG.

In the shown example, ratings "A" through "J" are provided as the "ratings" for the "color sensor." The condition information generated by the color sensor corresponds to any one of the "A" through "J" shown in the "ratings" for the "color sensor." For the color sensor, ten levels of ratings are defined for the condition of the perishable products FG, and the freshness of the perishable products FG in terms of their color is determined according to the level to which the condition information belongs. For the "color sensor," "A" of the "ratings" means the highest freshness of the perishable products FG in terms of their color. Also, for the "color sensor," "J" of the "ratings" means the lowest freshness of the perishable products FG in terms of their color.

Ratings "a" through "t" are provided as the "ratings" for the "odor sensor." The condition information generated by the odor sensor corresponds to any one of the "a" through "t" shown in the "ratings" for the "odor sensor." For the odor sensor, twenty levels of ratings are defined for the condition of the perishable products FG, and the freshness of the perishable products FG in terms of their odor is determined according to the level to which the condition information belongs. For the "odor sensor," "a" of the "ratings" means the highest freshness of the perishable products FG in terms of their odor. Also, for the "odor sensor," "t" of the "ratings" means the lowest freshness of the perishable products FG in terms of their odor.

Ratings "aa" through "jj" are provided as the "ratings" for the "biosensor." The condition information generated by the biosensor corresponds to any one of the "aa" through "jj" shown in the "ratings" for the "biosensor." For the biosensor, ten levels of ratings are defined for the condition of the perishable products FG, and the freshness of the perishable products FG in terms of the amount of bacteria generated therefrom is determined according to the level to which the condition information belongs. For the "biosensor," "aa" of the "ratings" means the highest freshness of the perishable products FG in terms of the amount of bacteria generated therefrom. Also, for the "biosensor," "jj" of the "ratings" means the lowest freshness of the perishable products FG in terms of the amount of bacteria generated therefrom.

As such, in the present embodiment, the number of rating levels to indicate the condition of the perishable products FG is defined for each type of the sensor. In addition, in the present embodiment, a different type of ratings for the condition of the perishable products FG is used for each type of the sensor.

It should be noted that the value of the condition information associated with each of the "ratings" for each sensor is not limited to a single value. A certain range of values of the condition information may be associated with each of the "ratings" for each sensor.

Also, the "ratings" for the "freshness" in the rating management table provides ratings of the freshness of the perishable products FG. This "freshness" is an overall rating of the condition of the perishable products FG. More specifically, the "freshness" is an overall rating corresponding to each condition of the perishable products FG identified from the various ratings defined for each sensor. For the "ratings" of the "freshness," ten levels of ratings, from "1" through "10," are defined for the freshness of the perishable products FG, with a higher value corresponding to a higher freshness. In other words, the value "10" means the highest freshness and the value "1" means the lowest freshness.

In the shown example, "A" of the "ratings" for the "color sensor" corresponds to "10" of "freshness." Also, "a" and "b" of the "ratings" for the "odor sensor" correspond to "10" of "freshness." Also, "aa" of the "ratings" for the "biosensor" corresponds to "10" of "freshness." As such, each of the "ratings" for the "freshness" corresponds to any of the "ratings" for any sensor.

A process performed by the server 30 is now described.

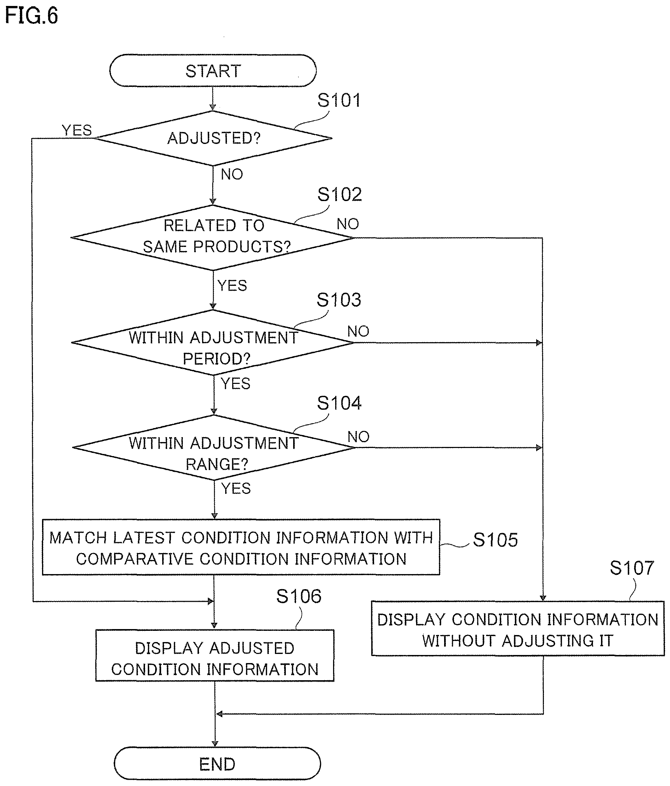

FIG. 6 is a flowchart of an adjustment process. The adjustment process is a process in which the server 30 adjusts the condition information acquired by the acquisition section 301. In response to the acquisition section 301 acquiring the condition information, the adjustment process is initiated. Hereinafter, the condition information that triggers the initiation of the adjustment process may be referred to as the latest condition information. Also, the condition information identified by any sensor before the time when the latest condition information was identified by the relevant sensor may be hereinafter referred to as the past condition information.

The control section 303 of the server 30 determines whether the past condition information transmitted from the sensor that generated the latest condition information has been adjusted (step (hereinafter may be abbreviated as "S") 101). The control section 303 makes this determination based on whether the past "condition information" generated by the sensor shown in the "sensor identification information" associated with the latest "condition information" in the condition information management table (see FIG. 4) has already been adjusted.

If the past condition information has not been adjusted (No at S101), the control section 303 determines whether there exists any past condition information that is related to the same perishable products FG as the latest condition information (S102). The control section 303 refers to the condition information management table. Then, the control section 303 makes the above determination based on whether there exists any past "condition information" associated with the same "identification target" as that associated with the latest "condition information." It should be noted that the past "condition information" generated by the sensor that generated the latest "condition information" is not subject to extraction at step 102. In other words, at step 102, the control section 303 extracts the past "condition information" associated with the "sensor identification information" that is different from the "sensor identification information" associated with the "latest condition information."

If there is no past condition information related to the same perishable products FG (No at S102), the control section 303 does not adjust the latest condition information. In this case, the display section 304 displays, on the display mechanism 30d, the latest condition information without any adjustment made thereto (S107).

If there is any past condition information related to the same perishable products FG (YES at S102), the process moves to the next step. The past "condition information" associated with the same "identification target" as that associated with the latest "condition information" may be hereinafter referred to as comparative condition information. There may be multiple instances of such past "condition information" associated with the same "identification target" as that associated with the latest "condition information." In such cases, from among these multiple instances of the "condition information," the "condition information" associated with the "identification time" that is closest to the "identification time" of the latest "condition information" is selected as the comparative condition information.

The control section 303 determines whether a period from the time when the comparative condition information was identified by the relevant sensor to the time when the latest condition information was identified by the relevant sensor is within an adjustment period (S103). The adjustment period is a threshold for whether the control section 303 should use the comparative condition information to adjust the latest condition information. More specifically, the adjustment period is a threshold defined in terms of the period from the time when the comparative condition information was identified to the time when the latest condition information was identified. The adjustment period may be any period of time, e.g., one hour. The control section 303 makes the above determination based on whether the period from the "identification time" associated with the comparative "condition information" to the "identification time" associated with the latest "condition information" in the condition information management table is within the adjustment period.

If the period from the time when the comparative condition information was identified to the time when the latest condition information was identified exceeds the adjustment period (NO at S103), the control section 303 does not adjust the latest condition information. In this case, the display section 304 displays, on the display mechanism 30d, the latest condition information without any adjustment made thereto (S107).

If the period from the time when the comparative condition information was identified to the time when the latest condition information was identified is within the adjustment period (YES at S103), the process moves to the next step.

The control section 303 determines whether difference between the freshness of perishable products FG identified from the latest condition information and the freshness of the perishable products FG identified from the comparative condition information is within an adjustment range (S104). The adjustment range is a threshold for whether the control section 303 should use the comparative condition information to adjust the latest condition information. More specifically, the adjustment range is a threshold defined in terms of difference between the freshness of the perishable products FG identified from the latest condition information and the freshness of the perishable products FG identified from the comparative condition information. For example, the adjustment range is a range of two consecutive levels of the "ratings" for the "freshness" in the rating management table (see FIG. 5). The control section 303 refers to the condition information management table and the rating management table. Then, the control section 303 makes the above determination based on whether difference between the "rating value of the "freshness" corresponding to the latest "condition information" and the rating value of the "freshness" corresponding to the comparative "condition information" is within the adjustment range.

If the difference between the two freshness values is not within the adjustment range (NO at S104), the control section 303 does not adjust the latest condition information. In this case, the display section 304 displays, on the display mechanism 30d, the latest condition information without any adjustment made thereto (S108).

If the difference between the two freshness values is within the adjustment range (YES at S104), the control section 303 adjusts the latest condition information such that it matches the comparative condition information (S105). More specifically, the control section 303 refers to the condition information management table and the rating management table. Then, the control section 303 sets a value obtained by subtracting the rating value of the "freshness" corresponding to the latest "condition information" from the rating value of the "freshness" corresponding to the comparative "condition information" as an adjustment factor used to adjust the latest condition information. Further, the control section 303 adds the set adjustment factor to the rating value of the "freshness" corresponding to the latest "condition information" as an adjustment to the latest condition information.

An example of the adjustment method performed by the control section 303 is described below. This example assumes that the condition information "B" identified at "15:00" in the condition information management table is the comparative condition information, and the condition information "e" identified at "15:30" is the latest condition information. The control section 303 subtracts the rating value "8" of the "freshness" corresponding to the latest condition information "e" from the rating value "9" of the "freshness" corresponding to the comparative condition information "B." Then, the value "+1" obtained by this subtraction is set as an adjustment factor used to adjust the condition information generated by the sensor "20S-1." Further, the control section 303 adds the set adjustment factor "+1" to the rating value "8" of the "freshness" corresponding to the latest condition information "e," and treats the thus-obtained value "9" as the "freshness" of the perishable products FG identified from the adjusted condition information.

The control section 303 instructs the display section 304 to display the adjusted condition information on the display mechanism 30d. In response to the instruction from the control section 303, the display section 304 displays the adjusted condition information on the display mechanism 30d (S106).

If it is determined at step 101 that the control section 303 has already adjusted the past condition information (YES at S101), an adjustment factor has already been set by the control section 303. In this case, the control section 303 adjusts the latest condition information using the already set adjustment factor. More specifically, the control section 303 adds the already set adjustment factor to the rating value of the "freshness" corresponding to the latest condition information. Thus, the control section 303 causes the adjusted condition information to be displayed on the display mechanism 30d.

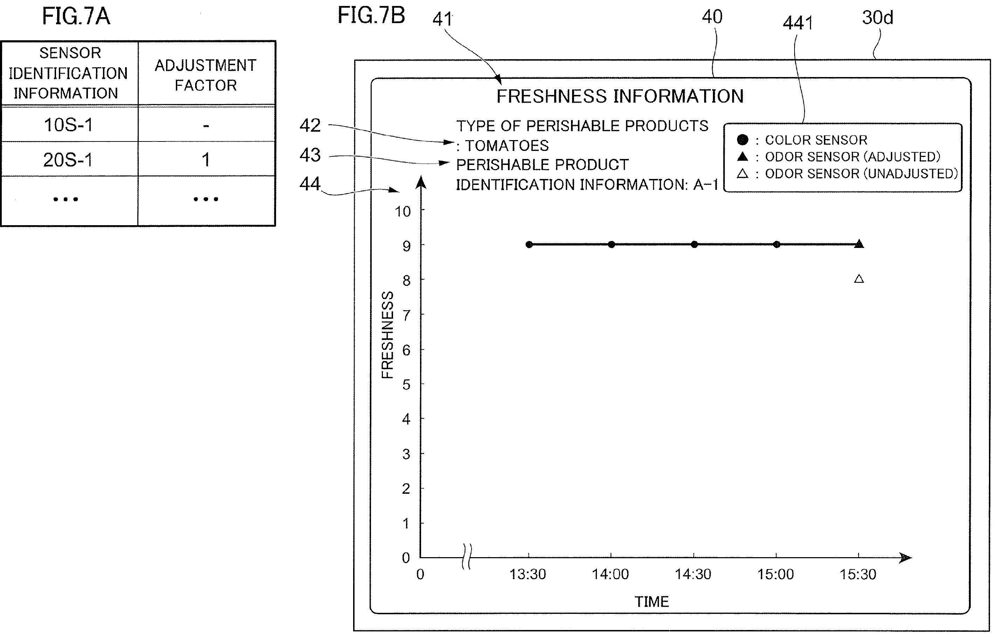

FIG. 7A shows an adjustment factor management table, and FIG. 7B shows a freshness notification screen 40.

The adjustment factor management table shown in FIG. 7A is used to manage the adjustment factors set by the control section 303 in the adjustment process (see FIG. 6). The adjustment factor management table is stored in the storage section 302.

The "sensor identification information" items in the adjustment factor management table represent the identification information for identifying the sensors. In the shown example, the "sensor identification information" items include the items "10S-1" and "20S-1."

The "adjustment factor" items in the adjustment factor management table represent the adjustment factors set by the control section 303 in the adjustment process. The symbol "-" in the "adjustment factor" column means that no adjustment factor has been set by the control section 303. The value "1" in the "adjustment factor" column means that "+1" is set as the adjustment factor. Once the control section 303 of the server 30 sets the adjustment factor for the sensor of "20S-1" as illustrated by the above control process (see FIG. 6), the control section 303 populates the field for "20S-1" within the "adjustment factor" column with the value "1."

The freshness notification screen 40 shown in Figure 7B is a screen for notifying the user of the server 30 of the freshness of the perishable products FG. In response to the acquisition section 301 of the server 30 acquiring the condition information, the freshness notification screen 40 presenting the freshness of the perishable products FG related to the acquired condition information is displayed on the display mechanism 30d. The following description illustrates the freshness notification screen 40 that is displayed in response to the acquisition section 301 acquiring the condition information "e" identified at "15:30" by the "odor sensor" of "20S-1" shown in the condition information management table (see FIG. 4).

The freshness notification screen 40 includes a generic name notification section 41, a type notification section 42, an identification notification section 43, and a freshness notification section 44.

The generic name notification section 41 presents a generic name of the information shown on the freshness notification screen 40. In the shown example, the text "freshness information" is presented in the generic name notification section 41.

The type notification section 42 presents the type of the perishable products FG to which the notification in the freshness notification screen 40 pertains. In the shown example, the text "tomatoes" representing the type of the perishable products FG is presented in the type notification section 42.

The identification notification section 43 presents the identification information ID (see FIG. 1) of the perishable products FG to which the notification in the freshness notification screen 40 pertains. In the shown example, the text "A-1" representing the identification information ID of the perishable products FG is presented in the identification notification section 43.

The freshness notification section 44 presents a graph of the freshness of the perishable products FG. The "time" on the horizontal axis of the graph represents the times at which the condition of the perishable products FG was identified by the respective sensors. The "time" corresponds to the "identification time" shown in the condition information management table (see FIG. 4). The "freshness" on the vertical axis of the graph represents the freshness of the perishable products FG.

The freshness notification section 44 also includes the information type notification section 441. The information type notification section 441 presents the types of condition information corresponding to the freshness presented in the freshness notification section 44. In the shown example, the information type notification section 441 indicates that the freshness of the perishable products FG identified from the condition information generated by the color sensor is shown by a symbol "•" (black circle) in the freshness notification section 44. The information type notification section 441 also indicates that the freshness of the perishable products FG identified from the condition information generated by the odor sensor and adjusted by the control section 303 is shown by a symbol "▲" (black triangle) in the freshness notification section 44. Also, the information type notification section 441 indicates that the freshness of the perishable products FG identified from the condition information generated by the odor sensor and prior to adjustment by the control section 303 is shown by a symbol "△" (white triangle) in the freshness notification section 44.

The freshness notification section 44 presents the symbol "•"corresponding to the freshness "9" at each of the times "13:30," "14:00," "14:30," and "15:00." This corresponds to the rating of the freshness identified from the "condition information" related to the sensor identification "10S-1," which is the "color sensor" associated with "13:30," "14:00," "14:30," and "15:00" in the "identification time" column in the condition information management table (see FIG. 4). Additionally, the freshness notification section 44 presents the symbol "△" corresponding to the freshness "8" at the time "15:30." This corresponds to the rating of the freshness identified from the "condition information" related to "20S-1," which is the "odor sensor" associated with "15:30" in the "identification time" column in the condition information management table. Further, the freshness notification section 44 presents the symbol "A" corresponding to the freshness "9" at the time "15:30." This corresponds to the rating of the freshness identified from the adjusted "condition information" associated with "15:30" in the "identification time" column in the condition information management table. More specifically, the symbol "A" represents the rating of the freshness that is obtained by adding "1," which is the "adjustment factor" shown in the adjustment factor management table (see FIG. 7A), to "8," which is the freshness rating corresponding to the "condition information" associated with "15:30."

As described above, in the present embodiment, the control section 303 of the server 30 adjusts the condition information identified by the sensors to allow the user to compare the freshness of the perishable products FG identified by the land-based sensor 10S and the sea-based sensor 20S on the same scale. More specifically, the control section 303 adjusts an initial identified condition information identified by the relevant sea-based sensor 20S such that it matches a last identified condition information identified by the relevant land-based sensor 10S.

Here, the freshness of the perishable products FG identified by each sensor may be at variance with each other due to, for example, differences in individual characteristics of the sensors. In such cases, when there is a difference between freshness values identified at different times respectively by the land-based sensor 10S and the sea-based sensor 20S, the user may be unable to determine whether such freshness difference is due to a decrease in freshness over time or due to differences in individual characteristics of the sensors. Therefore, it is difficult to manage the condition of the perishable products FG based on the freshness identified at different times respectively by the land-based sensor 10S and the sea-based sensor 20S.

In contrast, matching the condition information from the sea-based sensor 20S with that from the land-based sensor 10S as in the present embodiment reduces inconsistencies between the freshness of the perishable products FG identified by the land-based sensor 10S and the freshness of the perishable products FG identified by the sea-based sensor 20S. This technique facilitates management of the freshness of the perishable products FG based on the freshness of the perishable products FG identified at different times respectively by the land-based sensor 10S and the sea-based sensor 20S.

Also, as mentioned above, the present embodiment uses different types of ratings for the respective types of sensors to indicate the condition of the perishable products FG as the condition information. Using the rating management table (see FIG. 5), the control section 303 replaces the relevant rating of the condition information with the corresponding "rating" of the "freshness," which is the overall rating, before adjusting the condition information.

This makes it easier for the user to understand the freshness of the perishable products FG identified by the land-based sensor 10S and the sea-based sensor 20S that are of different types, as compared to when the types of ratings to indicate the freshness of the perishable products FG identified by these sensors are not unified.

Additionally, In the present embodiment, criteria such as the adjustment period (see FIG. 6) and the adjustment range are defined for the relationship between the comparative condition information and the latest condition information. Unless these criteria are met, the control section 303 does not adjust the condition information.

If the period between the time when the comparative condition information was identified and the time when the latest condition information was identified is long, the freshness of the perishable products FG may decrease during this period. Also, if there is large difference between the freshness of the perishable products FG identified from the comparative condition information and the freshness of the perishable products FG identified from the latest condition information, such difference may not be caused solely by differences in individual characteristics of the sensors. In such cases, if the control section 303 matches the latest condition information with the comparative condition information, difference between the freshness of the perishable products FG identified from the adjusted condition information and the actual freshness of the perishable products FG may become large.

Thus, in the present embodiment, if the criteria defined for the relationship between the comparative condition information and the latest condition information are not met, the control section 303 does not adjust the condition information. This inhibits an increase in difference between the freshness identified from the adjusted condition information and the actual freshness.

In the present embodiment, the control section 303 of the server 30 matches the latest condition information with the comparative condition information. However, the present disclosure is not limited to this embodiment.

The control section 303 may only adjust the latest condition information so as to approximate it to the comparative condition information, so that the control section 303 does not have to match the latest condition information with the comparative condition information. For example, when the freshness of the perishable products FG identified from the latest condition information is "6" and the freshness of the perishable products FG identified from the comparative condition information is "8," the control section 303 may adjust the freshness of the perishable products FG identified from the latest condition information to "7." In other words, the control section 303 may adjust the latest condition information according to the comparative condition information.

The control section 303 may also adjust the comparative condition information according to the latest condition information. Further, the control section 303 may adjust the latest condition information according to the comparative condition information and adjust the latest condition information according to the latest condition information.

In the present embodiment, the perishable product management system 1 adjusts at least one of the condition information about the perishable products FG when they are being transported by land and the condition information about the perishable products FG when they are being transported by sea. However, the present disclosure is not limited to this embodiment.

The perishable product management system 1 may adjust at least one of instances of the condition information about the perishable products FG at different stages of their distribution over the period from harvest to consumption. Also, the control section 303 may adjust the latest condition information, provided that a distribution stage at which the latest condition information was identified is different from a distribution stage at which the comparative condition information was identified. The control section 303 may identify a distribution stage at which the condition information was identified, based on the identification information about the sensor that identified the condition information.

Alternatively, the control section 303 may adjust the latest condition information according to the comparative condition information when the comparative condition information and the latest condition information were at the same distribution stage and identified at different times.

<Second Embodiment>

A second embodiment is now described.

The second embodiment is similar to the first embodiment in that both embodiments adjust the condition information identified by the sensors. However, the first embodiment adjusts the condition information identified by one of the land-based sensor 10S and the sea-based sensor 20S according to the condition information identified by the other. The second embodiment differs from the first embodiment in that the second embodiment adjusts the condition information identified by the land-based sensor 10S and the condition information identified by the sea-based sensor 20S according to condition information identified by a sensor different from both the land-based sensor 10S and the sea-based sensor 20S.

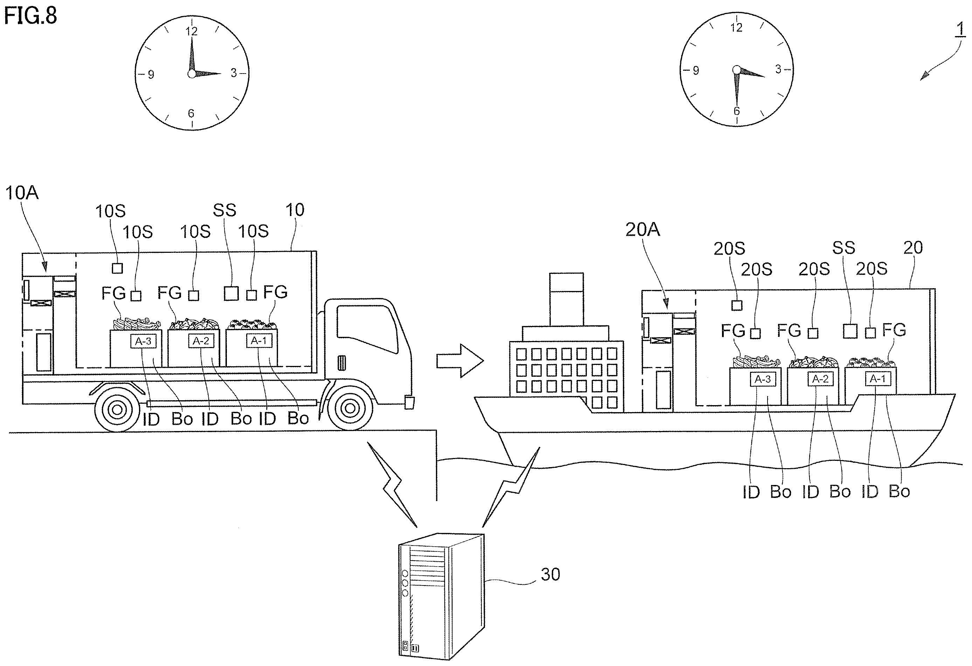

FIG. 8 shows the perishable product management system 1 of the second embodiment. Descriptions of components in the second embodiment similar to those in the first embodiment will not be repeated.

In the second embodiment, the land container 10 and the sea container 20 are provided with a reference sensor SS.

The reference sensor SS, which is an example of the identification unit, is a sensor that serves as a reference for adjusting the condition information generated by the land-based sensors 10S and the sea-based sensors 20S. In the present embodiment, similarly to the first embodiment, the land-based sensors 10S are provided in the land container 10 and not provided in the sea container 20. Also, the sea-based sensors 20S are provided in the sea container 20 and not provided in the land container 10. In contrast, the reference sensor SS is provided in both the land container 10 and the sea container 20. More specifically, in the present embodiment, the perishable products FG and the reference sensor SS are provided in the land container 10, and the perishable products FG are transported overland while the condition thereof is detected by the reference sensor SS. Then, the perishable products FG and the reference sensor SS are transferred from the land container 10 to the sea container 20, and the perishable products FG are transported by sea while the condition thereof is detected by the reference sensor SS.

Any sensor that identifies the condition of the perishable products FG may be used as the reference sensor SS.

The reference sensor SS identifies the condition of the perishable products FG and generates the condition information at predetermined time intervals. The predetermined time interval may be any interval. Every time the reference sensor SS generates the condition information, the reference sensor SS transmits the generated condition information to the server 30 along with time information indicative of a time when the condition of the perishable products FG was identified, the identification information ID identifying the relevant perishable products FG, and sensor identification information (not shown) identifying the reference sensor SS.

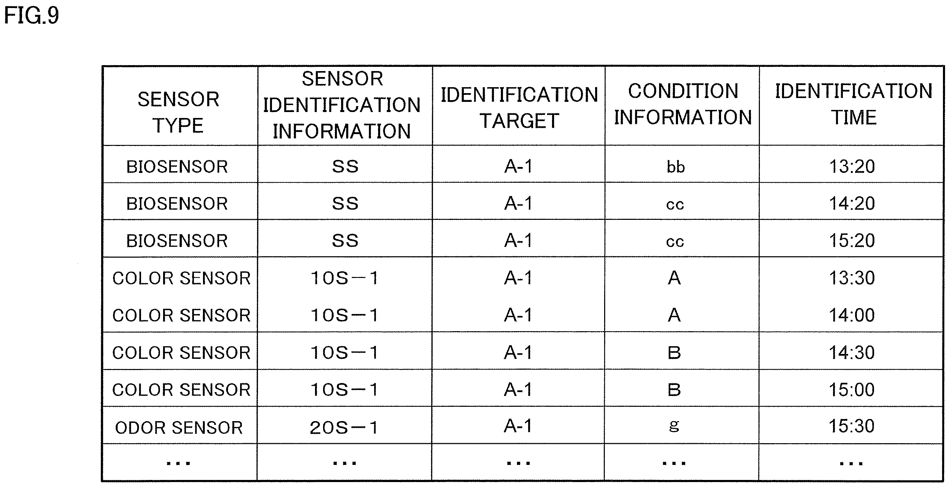

FIG. 9 shows a condition information management table of the present embodiment.

The "sensor type" items in the condition information management table includes the items "color sensor," "odor sensor," "biosensor," etc.

The "sensor identification information" items in the condition information management table include the items "SS," "10S-1," and "20S-1." The item "SS" represents the reference sensor SS.

The condition information management table also includes the "identification target," "condition information," and "identification time" items, similarly to the condition information management table in the first embodiment.

An adjustment process of the present embodiment is now described.

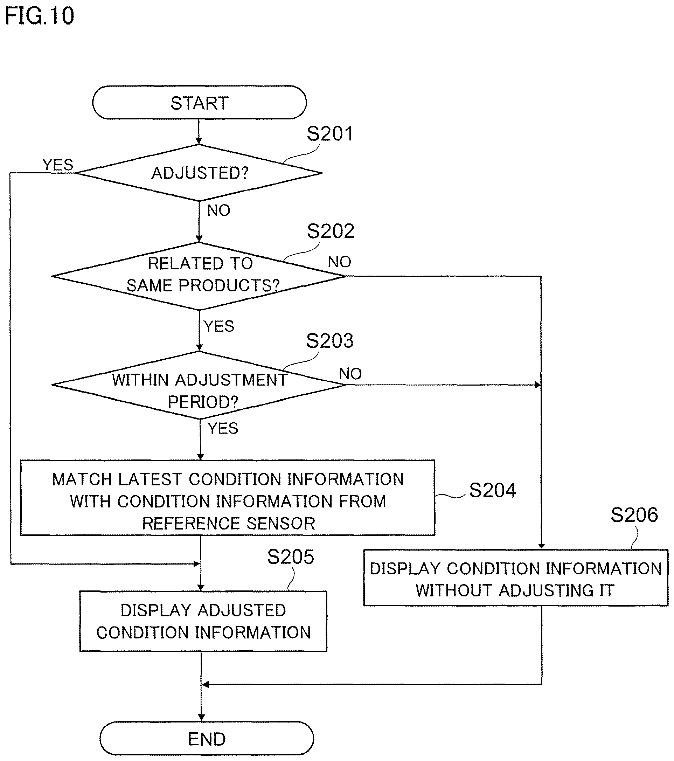

FIG. 10 is a flowchart of the adjustment process of the present embodiment. In response to the acquisition section 301 acquiring the condition information transmitted from any one of the land-based sensors 10S and the sea-based sensors 20S, the adjustment process is initiated.

The control section 303 of the server 30 determines whether past condition information transmitted from the sensor that generated the latest condition information has been adjusted (S201).

If the past condition information has not been adjusted (No at S201), the control section 303 determines whether there exists any past condition information that is related to the same perishable products FG as the latest condition information and is generated by the reference sensor SS (S202). The control section 303 refers to the condition information management table (see FIG. 9). Then, the control section 303 makes the above determination based on whether there exists any "condition information" that is associated with the same "identification target" as that associated with the latest "condition information" and is associated with "SS," which identifies the reference sensor SS.

If there is no such past condition information related to the same perishable products FG (No at S202), the control section 303 does not adjust the latest condition information. In this case, the display section 304 displays, on the display mechanism 30d, the latest condition information without any adjustment made thereto (S206).

If there is any past condition information related to the same perishable products FG (YES at S202), the process moves to the next step. The "condition information" that is from the reference sensor SS and associated with the same "identification target" as that associated with the latest "condition information" may be hereinafter referred to as "comparative condition information." There may be multiple instances of such "condition information" that is from the reference sensor SS and associated with the same "identification target" as that associated with the latest "condition information." In such cases, from among these multiple instances of the "condition information" from the reference sensor SS, the "condition information" associated with the "identification time" that is closest to the "identification time" of the latest "condition information" is selected as the comparative condition information.

The control section 303 determines whether a period between the time when the comparative condition information was identified and the time when the latest condition information was identified is within an adjustment period (S203). The control section 303 refers to the condition information management table. The control section 303 makes the above determination based on whether the period between the "identification time" associated with the comparative "condition information" and the "identification time" associated with the latest "condition information" is within the adjustment period.

If the period between the time when the comparative condition information was identified and the time when the latest condition information was identified exceeds the adjustment period (NO at S203), the control section 303 does not adjust the latest condition information. In this case, the display section 304 displays, on the display mechanism 30d, the latest condition information without any adjustment made thereto (S206).

If the period between the time when the comparative condition information was identified and the time when the latest condition information was identified is within the adjustment period (YES at S203), the control section 303 adjusts the latest condition information such that it matches the comparative condition information (S204). More specifically, the control section 303 refers to the condition information management table (see FIG. 9) and the rating management table (see FIG. 5). Then, the control section 303 sets a value obtained by subtracting the rating value of the "freshness" corresponding to the latest "condition information" from the rating value of the "freshness" corresponding to the comparative "condition information" as an adjustment factor used to adjust the latest condition information. Further, the control section 303 adds the set adjustment factor to the rating value of the "freshness" corresponding to the latest "condition information" as an adjustment to the latest condition information.

An example of the adjustment method performed by the control section 303 is described below. This example assumes that the condition information "bb" identified at "13:20" in the condition information management table (see FIG. 9) is the comparative condition information, and the condition information "A" identified at "13:30" is the latest condition information. The control section 303 subtracts the rating value "10" of the "freshness" corresponding to the latest condition information "A" from the rating value "9" of the "freshness" corresponding to the comparative condition information "bb." Then, the value "-1" obtained by this subtraction is set as an adjustment factor used to adjust the condition information generated by the sensor "10S-1." Further, the control section 303 adds the set adjustment factor "-1" to the rating value "10" of the "freshness" corresponding to the latest condition information "A," and treats the thus-obtained value "9" as the "freshness" of the perishable products FG identified from the adjusted condition information.

Another example of the adjustment method performed by the control section 303 is described below. This example assumes that the condition information "cc" identified at "15:20" in the condition information management table is the comparative condition information, and the condition information "g" identified at "15:30" is the latest condition information. The control section 303 subtracts the rating value "7" of the "freshness" corresponding to the latest condition information "g" from the rating value "8" of the "freshness" corresponding to the comparative condition information "cc." Then, the value "+1" obtained by this subtraction is set as an adjustment factor used to adjust the condition information generated by the sensor "20S-1." Further, the control section 303 adds the set adjustment factor "+1" to the rating value "7" of the "freshness" corresponding to the latest condition information "g," and treats the thus-obtained value "8" as the "freshness" of the perishable products FG identified from the adjusted condition information.

The control section 303 instructs the display section 304 to display the adjusted condition information on the display mechanism 30d. In response to the instruction from the control section 303, the display section 304 displays the adjusted condition information on the display mechanism 30d (S205).

If it is determined at step 201 that the control section 303 has already adjusted the past condition information (YES at S201), an adjustment factor has already been set by the control section 303. In this case, the control section 303 adjusts the latest condition information using the already set adjustment factor and causes the adjusted condition information to be displayed on the display mechanism 30d.

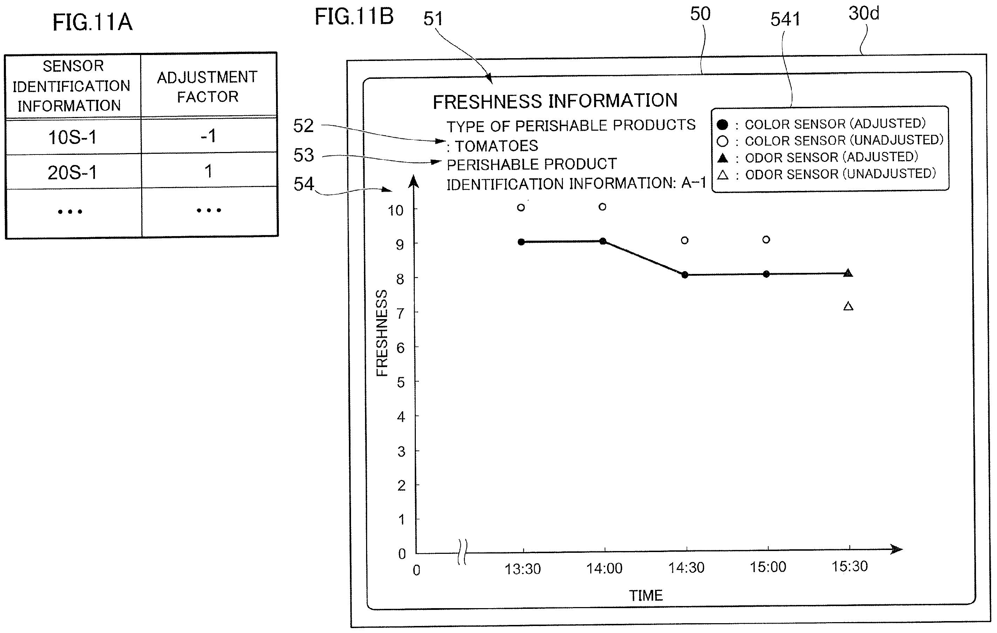

FIG. 11A shows an adjustment factor management table of the present embodiment, and FIG. 11B shows a freshness notification screen 50 of the present embodiment.

The "adjustment factor" column in the adjustment factor management table shown in FIG. 11A includes an adjustment factor "-1" for the sensor of "10S-1." Also, the "adjustment factor" column in the adjustment factor management table includes an adjustment factor "1" for the sensor "20S-1." Once the control section 303 of the server 30 sets the adjustment factor for the sensor of "10S-1" as illustrated by the above control process (see FIG. 10), the control section 303 populates the field for "10S-1" within the "adjustment factor" column with the value "-1." Also, once the control section 303 sets the adjustment factor for the sensor of "20S-1" as illustrated by the above control process, the control section 303 populates the field for "20S-1" within the "adjustment factor" column with the value "1."

In response to the acquisition section 301 of the server 30 acquiring the condition information from any one of the land-based sensors 10S and the sea-based sensors 20S, the freshness notification screen 50 shown in FIG. 11B is displayed on the display mechanism 30d. The following description illustrates the freshness notification screen 50 that is displayed in response to the acquisition section 301 acquiring the condition information "g" identified at "15:30" by the "odor sensor" of "20S-1" shown in the condition information management table (see FIG. 9).

The freshness notification screen 50 includes a generic name notification section 51, a type notification section 52, an identification notification section 53, and a freshness notification section 54.

The generic name notification section 51 presents a generic name of the information shown on the freshness notification screen 50. In the shown example, the text "freshness information" is presented in the generic name notification section 51.

The type notification section 52 presents the type of the perishable products FG to which the notification in the freshness notification screen 50 pertains. In the shown example, the text "tomatoes" representing the type of the perishable products FG is presented in the type notification section 52.

The identification notification section 53 presents the identification information ID (see FIG. 8) of the perishable products FG to which the notification in the freshness notification screen 50 pertains. In the shown example, the text "A-1" representing the identification information ID of the perishable products FG is presented in the identification notification section 53.

The freshness notification section 54 presents a graph of the freshness of the perishable products FG. The "time" on the horizontal axis of the graph represents the times at which the condition of the perishable products FG was identified by the respective sensors. The "time" corresponds to the "identification time" shown in the condition information management table (see FIG. 9). The "freshness" on the vertical axis of the graph represents the freshness of the perishable products FG.

The freshness notification section 54 also includes the information type notification section 541. The information type notification section 541 presents the types of condition information corresponding to the freshness presented in the freshness notification section 54. **In** the shown example, the information type notification section 541 indicates that the freshness of the perishable products FG identified from the condition information generated by the color sensor and adjusted by the control section 303 is shown by a symbol "•" (black circle) in the freshness notification section 54. Also, the information type notification section 541 indicates that the freshness of the perishable products FG identified from the condition information generated by the color sensor and prior to adjustment by the control section 303 is shown by a symbol "○" (white circle) in the freshness notification section 54. The information type notification section 541 also indicates that the freshness of the perishable products FG identified from the condition information generated by the odor sensor and adjusted by the control section 303 is shown by a symbol "▲" (black triangle) in the freshness notification section 54. Also, the information type notification section 541 indicates that the freshness of the perishable products FG identified from the condition information generated by the odor sensor and prior to adjustment by the control section 303 is shown by a symbol "△" (white triangle) in the freshness notification section 54.

The freshness notification section 54 presents the symbol "○"corresponding to the freshness "10" at each of the times "13:30" and "14:00," and presents the symbol "○" corresponding to the freshness "9" at each of the times "14:30" and "15:00." This corresponds to the rating of the freshness identified from the "condition information" related to the "color sensor" associated with "13:30," "14:00," "14:30," and "15:00" in the "identification time" column in the condition information management table. Also, the freshness notification section 54 presents the symbol "•"corresponding to the freshness "9" at each of the times "13:30" and "14:00," and presents the symbol "•"corresponding to the freshness "8" at each of the times "14:30" and "15:00." This corresponds to the rating of the freshness identified from the adjusted "condition information" associated with "13:30," "14:00," "14:30," and "15:00" in the "identification time" column in the condition information management table. More specifically, each symbol **"•"** corresponding to the freshness "9" represents the rating of the freshness that is obtained by adding the adjustment factor "-1" shown in the adjustment factor management table (see FIG. 11A) to the freshness rating "10" corresponding to the "condition information" associated with "13:30" and "14:00." Also, each symbol "•" corresponding to the freshness "8" represents the rating of the freshness that is obtained by adding the adjustment factor "-1" shown in the adjustment factor management table to the freshness rating "9" corresponding to the "condition information" associated with "14:30" and "15:00."

The freshness notification section 54 presents the symbol "△" corresponding to the freshness "7" at the time "15:30." This corresponds to the rating of the freshness identified from the "condition information" related to the "odor sensor" associated with "15:30" in the "identification time" column in the condition information management table. Also, the freshness notification section 54 presents the symbol "▲" corresponding to the freshness "8" at the time "15:30." This corresponds to the rating of the freshness identified from the adjusted "condition information" associated with "15:30" in the "identification time" column in the condition information management table. More specifically, the symbol "▲" corresponding to the freshness "8" represents the rating of the freshness that is obtained by adding the adjustment factor "1" shown in the adjustment factor management table to the freshness rating "7" corresponding to the "condition information" associated with "15:30."

As described above, in the present embodiment, the control section 303 adjusts both the condition information identified by the land-based sensor 10S and the condition information identified by the sea-based sensor 20S according to the condition information identified by the reference sensor SS.

This technique reduces variance between the freshness of the perishable products FG identified by the land-based sensor 10S and the freshness of the perishable products FG identified by the sea-based sensor 20S that may be caused by differences in individual characteristics of the land-based sensor 10S and the sea-based sensor 20S. This facilitates management of the freshness of the perishable products FG based on the freshness of the perishable products FG identified at different times respectively by the land-based sensor 10S and the sea-based sensor 20S.

Additionally, in the present embodiment, the control section 303 adjusts the condition information from the land-based sensor 10S according to the condition information identified by the reference sensor SS while the perishable products FG are being transported overland. The control section 303 also adjusts the condition information from the sea-based sensor 20S according to the condition information identified by the reference sensor SS while the perishable products FG are being transported by sea. In other words, the control section 303 adjusts the condition information with reference to condition information that is identified in the same environment as the condition information to be adjusted.

This technique improves the adjustment accuracy as compared to adjusting the condition information with reference to condition information that is identified in a different environment from the condition information to be adjusted.

It should be noted that while the freshness notification section 54 of the freshness notification screen 50 in the present embodiment does not present the condition information identified by the reference sensor SS, the freshness notification section 54 may present the condition information identified by the reference sensor SS.

<Third Embodiment>

A third embodiment is now described.

The third embodiment is similar to the second embodiment in that both embodiments adjust the condition information identified by the land-based sensor 10S and the sea-based sensor 20S according to condition information identified by a sensor different from both the land-based sensor 10S and the sea-based sensor 20S. The second embodiment adjusts the condition information from the land-based sensor 10S and the sea-based sensor 20S according to condition information from a single sensor. The third embodiment differs from the second embodiment in that the third embodiment adjusts the condition information from the land-based sensor 10S and the sea-based sensor 20S according condition information from multiple sensors.

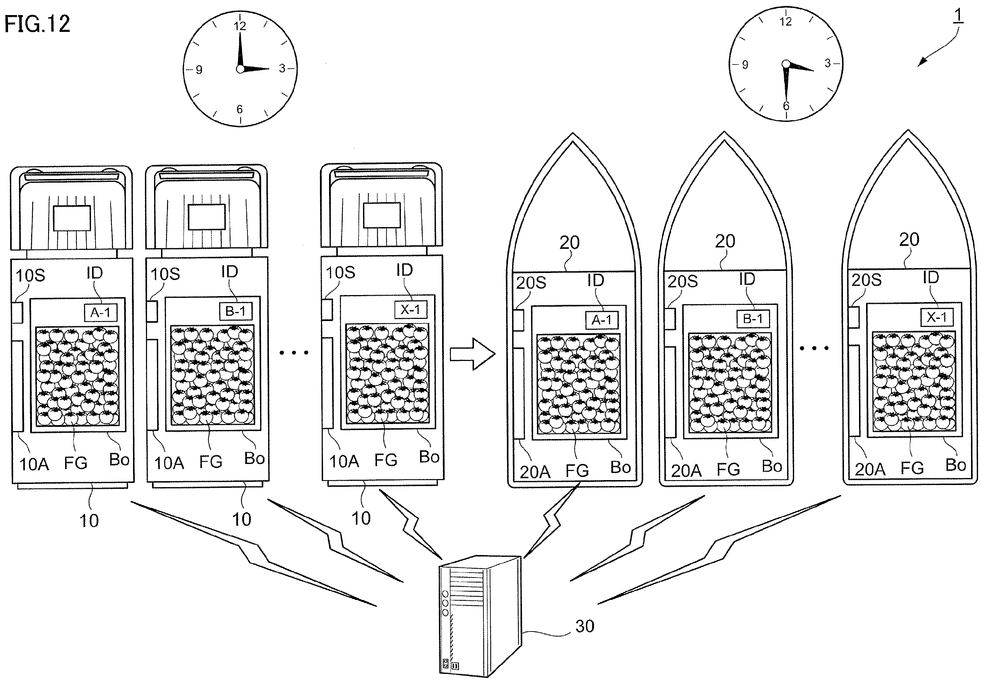

FIG. 12 shows the perishable product management system 1 of the third embodiment. Descriptions of components in the third embodiment similar to those in the second embodiment will not be repeated.

The perishable product management system 1 of the third embodiment includes multiple land containers 10, multiple sea containers 20, and the server 30. Each land container 10 and the server 30, and each sea container 20 and the server 30 are connected via a network.

In the present embodiment, the multiple land containers 10 are loaded on different trucks or other transportation means and transported overland. Each land container 10 is provided with the air conditioner 10A, the perishable products FG, the box Bo, and the land-based sensor 10S. Each box Bo is provided with identification information ID for identifying the perishable products FG it contains.

The land-based sensors 10S may be of the same type or of different types.

In the present embodiment, the multiple sea containers 20 are loaded on different ships or other transportation means and transported by sea. Each sea container 20 is provided with the air conditioner 20A, the perishable products FG, the box Bo, and the sea-based sensor 20S.

The perishable products FG are transported overland in each land container 10 and then transferred to each sea container 20 to be transported by sea in each sea container 20. The perishable products FG and the box Bo contained in each sea container 20 are the same perishable products FG and box Bo that were contained in each land container 10.

The sea-based sensors 20S may be of the same type or of different types.

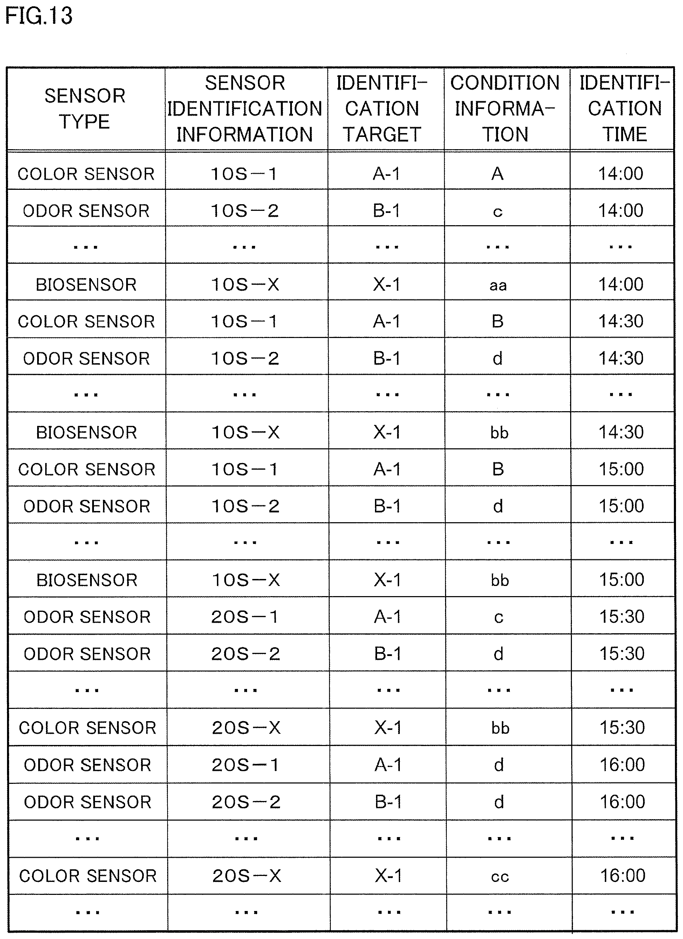

FIG. 13 shows a condition information management table of the present embodiment.

The condition information management table includes the "sensor type," "sensor identification information," "identification target," "condition information," and "identification time" items, similarly to the condition information management table in the second embodiment.

In the present embodiment, the "sensor identification information" items include the items "10S-1," "10S -2," "10S-X," "20S-1," "20S-2," and "20S-X." Here, the items "10S-1," "10S- 2," and "10S-X" represent the land-based sensors 10S provided in the respective land containers 10. In addition, the items "20S-1," "20S-2," and "20S-X" represent the sea-based sensors 20S provided in the respective sea containers 20.

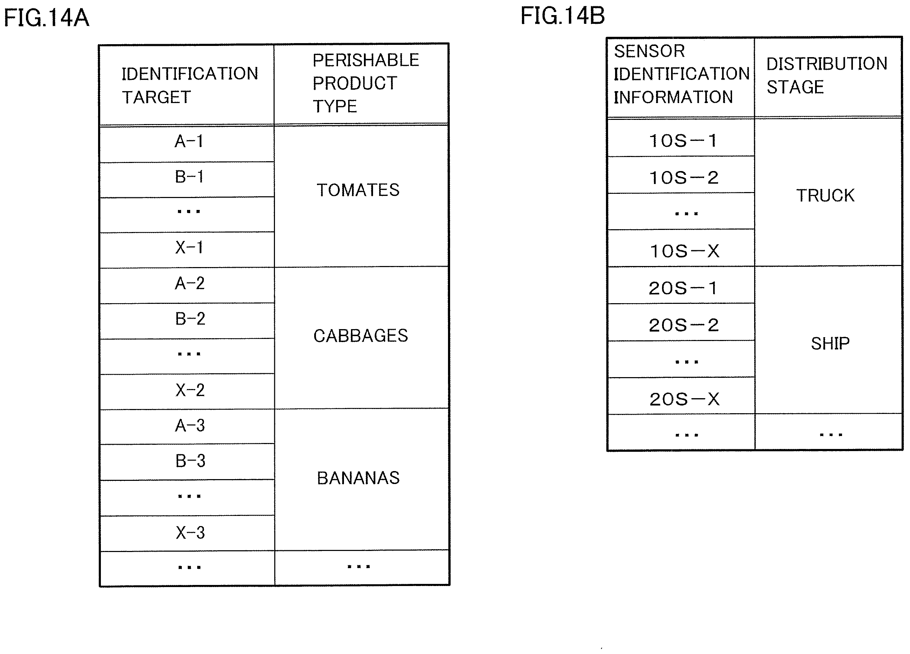

FIG. 14A shows a perishable product correspondence management table. FIG. 14B shows a sensor correspondence management table. The perishable product correspondence management table and the sensor correspondence management table are stored in the storage section 302.

The perishable product correspondence management table shown in FIG. 14A is used to manage correspondence between the identification information ID (see FIG. 12) of the perishable products FG and the perishable products FG.

The "identification target" column in the perishable product correspondence management table represents the identification information of the perishable products FG.

Also, the "perishable product type" column in the perishable product correspondence management table represents the types of perishable products FG. More specifically, the "perishable product type" column represents the types of perishable products FG identified from the respective "identification target" items.

In the shown example, the items "A-1," "B-1," and "X-1" in the "identification target" column are associated with the item "tomatoes" in the "perishable product type" column. Also, the items "A-2," "B-2," and "X-2" in the "identification target" column are associated with the item "cabbages" in the "perishable product type" column. Also, the items "A-3," "B-3," and "X-3" in the "identification target" column are associated with the item "bananas" in the "perishable product type" column.

The sensor correspondence management table shown in FIG. 14B is used to manage correspondence between the sensors and the distribution stages for the perishable products FG.

The "sensor identification information" column in the sensor correspondence management table represents the information for identifying the sensors.

The "distribution stage" column in the sensor correspondence management table represents the distribution stages for the perishable products FG. The item "truck" in the "distribution stage" column represents a distribution stage at which the perishable products FG are transported by land. The item "ship" in the "distribution stage" column represents a distribution stage at which the perishable products FG are transported by sea. Each item in the "sensor identification information" column associated with "truck" is the identification information of the sensor that identifies the condition of the perishable products FG during land transportation. In other words, any item in the "sensor identification information" column associated with "truck" is the identification information of the corresponding land-based sensor 10S. Each item in the "sensor identification information" column associated with "ship" is the identification information of the sensor that identifies the condition of the perishable products FG during sea transportation. In other words, any item in the "sensor identification information" column associated with "ship" is the identification information of the corresponding sea-based sensor 20S.

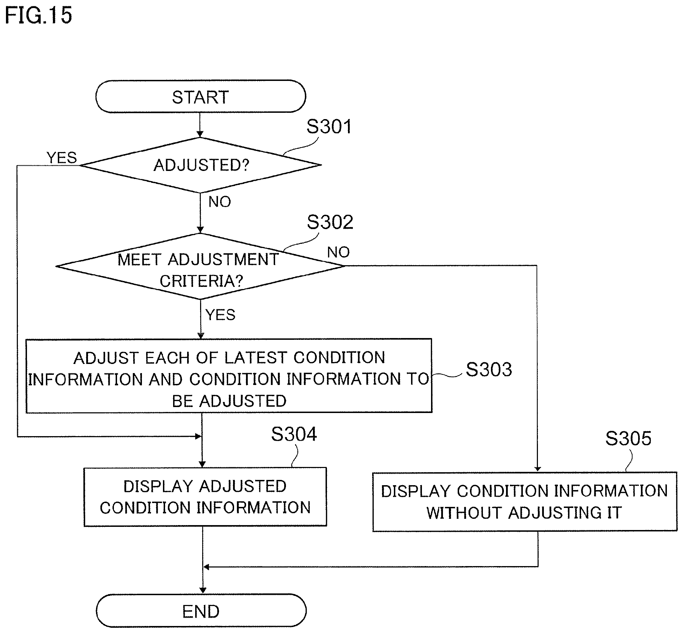

FIG. 15 is a flowchart of the adjustment process of the present embodiment. In response to the acquisition section 301 of the server 30 acquiring the condition information transmitted from any sensor, the adjustment process is initiated.

The control section 303 determines whether past condition information transmitted from the sensor that generated the latest condition information has been adjusted (S301).

If the control section 303 has not adjusted the past condition information (No at S301), the process moves to the next step.

The control section 303 determines whether adjustment criteria for adjusting the latest condition information are met (S302). Three criteria are defined as the adjustment criteria.

A first criterion of the adjustment criteria requires that condition information for the same type of perishable products FG as that related to the latest condition information exist in the condition information management table (see FIG. 13). In one example, the first criterion requires that, when the latest condition information is the condition information indicative of the condition of "tomatoes," there exist any condition information indicative of the condition of "tomatoes" in the condition information management table besides the latest condition information. The control section 303 refers to the condition information management table and the perishable product correspondence management table (see FIG. 14A). Then, the control section 303 extracts, as the "condition information" meeting the first criterion of the adjustment criteria, the "condition information" identified for the "identification target" associated with the same "perishable product type" as the "identification target" related to the latest "condition information."

A second criterion of the adjustment criteria requires that there exist condition information identified at the same distribution stage as the latest condition information in the condition information management table. In one example, the second criterion requires that, when the latest condition information is the condition information identified during land transportation of the perishable products FG, there exist any condition information identified during land transportation of the perishable products FG in the condition information management table besides the latest condition information. The control section 303 refers to the condition information management table and the sensor correspondence management table (see FIG. 14B). Then, the control section 303 extracts, as the "condition information" meeting the second criterion of the criteria, the "condition information" identified by the sensor with the "sensor identification information" associated with the same "distribution stage" as the "sensor identification information" of the sensor that identified the latest "condition information."

The condition information meeting both of the above two adjustment criteria is hereinafter referred to as "condition information to be adjusted."

A third criterion of the adjustment criteria requires that the number of instances of the condition information to be adjusted is greater than or equal to an adjustment threshold number. The adjustment threshold number is a threshold for the number of instances of the condition information by which the control section 303 determines whether to adjust the latest condition information and the condition information to be adjusted. The adjustment threshold number may be any number.

If the three criteria are not met (NO at S302), the control section 303 does not adjust the latest condition information. In this case, the display section 304 displays, on the display mechanism 30d, the latest condition information without any adjustment made thereto (S305).

If the three criteria are met (YES at S302), the process moves to the next step.

The control section 303 adjusts each of the latest condition information and the condition information to be adjusted based on the latest condition information and the condition information to be adjusted (S303).

The technique by which the control section 303 adjusts the latest condition information and the condition information to be adjusted is described below.

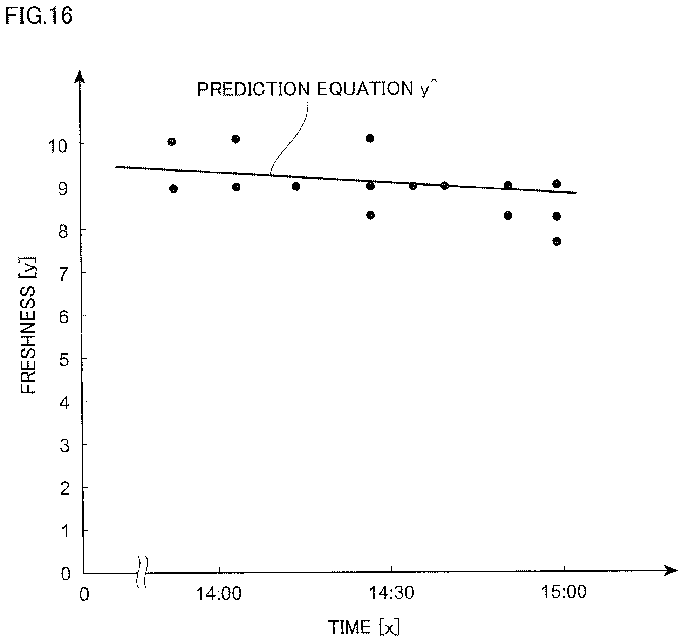

FIG. 16 shows a graph of the freshness of the perishable products FG identified from the latest condition information and the condition information to be adjusted. The "time" on the horizontal axis of the graph represents the times at which the condition of the perishable products FG was identified by the respective sensors. The "time" corresponds to the "identification time" shown in the condition information management table (see FIG. 13). The "freshness" on the vertical axis of the graph represents the freshness of the perishable products FG. The "freshness" corresponds to the freshness of the perishable products FG corresponding to the "condition information" shown in the condition information management table. The points in the graph are the latest "condition information" and the "condition information" to be adjusted associated with the "identification time" and "freshness."

The control section 303 predicts the freshness of the perishable products FG with respect to time using the latest condition information and the condition information to be adjusted. More specifically, the control section 303 calculates an equation to predict the freshness with respect to time, based on the relationship between the "time" and the "freshness" identified from the latest condition information and the relationship between the "time" and the "freshness" identified from each condition information to be adjusted.

For example, a moving average method or an exponential smoothing method may be used to calculate the prediction equation. The prediction equation calculated by the control section 303 is hereinafter referred to as a "prediction equation y^."

The control section 303 calculates a mean square error using the latest condition information, the condition information to be adjusted, and the calculated prediction equation y^. Here, the mean square error can be calculated by the following equation (1).

$$Mean\ square\ error = 1/n \sum_{i=1}^{n} \left( y^i - y^{\wedge i} \right)^2 \qquad (1)$$

In the above equation, n is the number of instances of the condition information used for calculation of the mean square error, and y is the freshness of the perishable products FG corresponding to the condition information.

The control section 303 sets the calculated mean square error as an adjustment factor used to adjust each of the latest condition information and the condition information to be adjusted. Using the set adjustment factor, the control section 303 adjusts the latest condition information. Furthermore, the control section 303 instructs the display section 304 to display the adjusted condition information on the display mechanism 30d. In response to the instruction from the control section 303, the display section 304 displays the adjusted condition information on the display mechanism 30d (S304).

If it is determined at step 301 that the control section 303 has already adjusted the past condition information (YES at S301), an adjustment factor has already been set by the control section 303. In this case, the control section 303 adjusts the latest condition information using the already set adjustment factor and causes the adjusted condition information to be displayed on the display mechanism 30d.

In the adjustment process, the control section 303 uses multiple instances of the condition information identified for the same type of perishable products FG during land transportation to adjust these multiple instances of the condition information. In other words, the control section 303 uses multiple instances of the condition information identified by the multiple land-based sensors 10S for the same type of perishable products FG to adjust the condition information from these multiple land-based sensors 10S.

In one example, the control section 303 uses the "condition information" identified for "tomatoes" by the land-based sensors 10S shown in the condition information management table (see FIG. 13) to adjust the condition information identified by these land-based sensors 10S. The land-based sensors 10S shown in the condition information management table are those with the "sensor identification information" of "10S-1," "10S-2," "10S-X," etc. The "condition information" identified for "tomatoes" includes the "condition information" identified at "14:00," "14:30," and "15:00," for the "identification target" of "A-1," "B-1," "X-1," etc.

Also, in the adjustment process, the control section 303 uses multiple instances of the condition information identified for the same type of perishable products FG during sea transportation to adjust these multiple instances of the condition information. In other words, the control section 303 uses multiple instances of the condition information identified by the multiple sea-based sensors 20S for the same type of perishable products FG to adjust the condition information from these multiple sea-based sensors 20S.

In one example, the control section 303 uses the "condition information" identified for "tomatoes" by the sea-based sensors 20S shown in the condition information management table to adjust the condition information identified by these sea-based sensors 20S. The sea-based sensors 20S shown in the condition information management table are those with the "sensor identification information" of "20S-1," "20S-2," "20S-X," etc. The "condition information" identified for "tomatoes" includes the "condition information" identified at "15:30" and "16:00" for the "identification target" of "A-1," "B-1," "X-1," etc.

As described above, in the present embodiment, the control section 303 adjusts multiple instances of the condition information identified by the multiple land-based sensors 10S according to each of these multiple instances of the condition information. The control section 303 also adjusts multiple instances of the condition information identified by the multiple sea-based sensors 20S according to each of these multiple instances of the condition information.

This technique reduces variance in the freshness of the perishable products FG identified by the respective land-based sensor 10S that may be caused by differences in individual characteristics of the land-based sensors 10S. This technique also reduces variance in the freshness of the perishable products FG identified by the respective sea-based sensor 20S that may be caused by differences in individual characteristics of the sea-based sensors 20S. As a result, this inhibits an increase in variance between the freshness of the perishable products FG identified by the land-based sensors 10S and the freshness of the perishable products FG identified by the sea-based sensor 20S. Inhibiting the increase in variance in the freshness identified by the respective sensors facilitates management of the freshness of the perishable products FG based on the freshness of the perishable products FG identified at different times by the respective land-based sensors 10S and sea-based sensors 20S.

In the present embodiment, the control section 303 adjusts each condition information identified at the same distribution stage. Here, each condition information subject to the adjustment is not limited to condition information identified by the sensors on the same day. Each condition information may be condition information identified by the sensors on different days. In other words, each condition information subject to the adjustment by the control section 303 may be condition information identified on any day.

Also, each condition information subject to the adjustment by the control section 303 may be condition information identified at different distribution stages provided that such condition information is identified under predetermined environment conditions for the perishable products FG. Examples of the predetermined environment conditions include a temperature environment for the perishable products FG within a predetermined temperature range and a humidity environment for the perishable products FG within a predetermined humidity range.

The control section 303 calculates the mean square error using the latest condition information and the condition information to be adjusted, and adjusts the latest condition information and the condition information to be adjusted based on the calculated mean square error. However, the present disclosure is not limited to this embodiment.

The control section 303 may use a least squares method to calculate a relational equation between the time and the freshness of the perishable products FG based on the latest condition information and the condition information to be adjusted. Then, the control section 303 may set an adjustment factor based on difference between the freshness of the perishable products FG identified from the latest condition information and the freshness of the perishable products FG corresponding to the time when the latest condition information was identified in the relational equation, and use the set adjustment factor to adjust the latest condition information. Further, the control section 303 may adjust each condition information to be adjusted in the same manner as adjusting the latest condition information.

The embodiments described above can be viewed as follows.

The control section 303 in the perishable product management system 1 adjusts, based on predetermined criteria, at least one of the first condition information about the condition information for the perishable products FG identified at the first time by the land-based sensor 10S and the second condition information about the condition information for the perishable products FG identified at the second time by the sea-based sensor 20S. The first time is, for example, the time when the perishable products FG are being transported overland. The second time is, for example, the time when the perishable products FG are being transported by sea. Examples of the information about the condition information include the condition information and information generated by processing of the condition information by the server 30. The first condition information is, for example, the condition information identified by the land-based sensor 10S. The second condition information is, for example, the condition information identified by the sea-based sensor 20S.

This technique reduces variance between the freshness of the perishable products FG identified by the land-based sensor 10S and the freshness of the perishable products FG identified by the sea-based sensor 20S. This facilitates management of the freshness of the perishable products FG based on the freshness of the perishable products FG identified at different times by the land-based sensor 10S and the sea-based sensor 20S.

The control section 303 also adjusts the second condition information according to the adjustment manner defined with respect to the first condition information. An example of the adjustment manner defined with respect to the first condition information includes an adjustment method of matching the second condition information with the first condition information. Another example of the adjustment manner defined with respect to the first condition information includes an adjustment method of adjusting the second condition information using the same sensor as that used to adjust the first condition information. Still another example of the adjustment manner defined with respect to the first condition information includes an adjustment method of adjusting the second condition information using the same statistical method as that used to adjust the first condition information, such as the mean square error method and the least squares method.

This technique reduces variance between the freshness of the perishable products FG identified by the land-based sensor 10S and the freshness of the perishable products FG identified by the sea-based sensor 20S as compared to when the second condition information is adjusted in an adjustment manner that is determined independently of the first condition information.

The control section 303 makes the type of rating for the second condition information the same as that for the first condition information to adjust the second condition information.

This technique makes it easier for the user to understand the condition of the perishable products FG identified by the land-based sensor 10S and the sea-based sensor 20S that are of different types, as compared to when the types of ratings to indicate the condition of the perishable products FG identified by these sensors are not unified.

The control section 303 adjusts the second condition information according to the first condition information.

This technique reduces variance between the freshness of the perishable products FG identified by the land-based sensor 10S and the freshness of the perishable products FG identified by the sea-based sensor 20S as compared to when the second condition information is adjusted independently of the first condition information.

When the predetermined criteria for the relationship between the first condition information and the second condition information are not met, the control section 303 does not adjust the second condition information according to the first condition information.

This technique inhibits an increase in difference between the freshness of the perishable products FG identified from the adjusted condition information and the actual freshness of the perishable products FG as compared to when the second condition information is adjusted unconditionally according to the first condition information.

The predetermined criteria for the relationship between the first condition information and the second condition information require that the interval between the first time and the second time be within the adjustment period.

This technique inhibits an increase in difference between the freshness of the perishable products FG identified from the adjusted condition information and the actual freshness of the perishable products FG as compared to when the second condition information is adjusted according to the first condition information despite the interval between the first time and the second time exceeding the adjustment period.

The control section 303 adjusts the first condition information according to the condition information for the perishable products FG identified at the third time by the reference sensor SS, and adjusts the second condition information according to the condition information for the perishable products FG identified at the fourth time by the reference sensor SS. For example, the third time is a time at which an interval from the first time to the third time is within the adjustment period. For example, the fourth time is a time at which an interval from the second time to the fourth time is within the adjustment period.

This technique reduces variance between the freshness of the perishable products FG identified by the land-based sensor 10S and the freshness of the perishable products FG identified by the sea-based sensor 20S as compared to when the first condition information and the second condition information are adjusted according to the condition information identified by different sensors. This facilitates management of the freshness of the perishable products FG based on the freshness of the perishable products FG identified at different times respectively by the land-based sensor 10S and the sea-based sensor 20S.

The perishable products FG are contained in the same land container 10 at the first and third times, contained in the same sea container 20 at the second and fourth times, and contained in the different accommodation units at the first and second times.

This technique reduces variance between the freshness of the perishable products FG identified by the land-based sensor 10S and the freshness of the perishable products FG identified by the sea-based sensor 20S even when the first condition information and the second condition information are identified in different environments.

The control section 303 adjusts the first condition information and the second condition information using multiple instances of the condition information identified by multiple sensors.

This technique reduces variance in the freshness of the perishable products FG identified at different times by the land-based sensor 10S and the sea-based sensor 20S as compared to when the first condition information and the second condition information are adjusted using a single instance of the condition information.

The control section 303 adjusts the first condition information according to each condition information that is one of multiple instances of the condition information identified by multiple sensors and meets the first criterion defined with respect to the first condition information, and adjusts the second condition information according to each condition information that is one of multiple instances of the condition information and meets the second criterion defined with respect to the second condition information.

This technique reduces variance in the freshness of the perishable products FG identified at different times by the land-based sensor 10S and the sea-based sensor 20S as compared to when all instances of the condition information identified by multiple sensors are used unconditionally to adjust the first condition information and the second condition information.

The first criterion is a criterion that is defined for the type of perishable products FG pertaining to the first condition information and for the condition and/or environment of the perishable products at the first time, and the second criterion is a criterion that is defined for the type of perishable products FG pertaining to the second condition information and for the condition and/or environment of the perishable products at the second time.

This technique reduces variance in the freshness of the perishable products FG identified at different times by the land-based sensor 10S and the sea-based sensor 20S as compared to when multiple instances of the condition information are used to adjust the first condition information and the second condition information regardless of the type, condition, and environment of the perishable products FG in the multiple instances of the condition information.

Viewed from another aspect, the present disclosure provides the adjustment method including: the first identification step of identifying, using the land-based sensor 10S, condition information about a condition of the perishable products FG contained in the land container 10 that contains the perishable products FG; the second identification step of identifying, using the sea-based sensor 20S different from the land-based sensor 10S, condition information about a condition of the perishable products FG contained in the sea container 20; and the adjustment step of adjusting at least one of first condition information and second condition information based on a predetermined criterion, the first condition information being about condition information for the perishable products FG identified at the first time by the first identification step, the second condition information being about condition information for the perishable products FG identified at the second time by the second identification step, the second time being different from the first time. The first time is, for example, the time when the perishable products FG are being transported overland. The second time is, for example, the time when the perishable products FG are being transported by sea. Examples of the information about the condition information include the condition information and information generated by processing of the condition information by the server 30. The first condition information is, for example, the condition information identified by the land-based sensor 10S. The second condition information is, for example, the condition information identified by the sea-based sensor 20S. The adjustment step is, for example, performed by the control section 303 of the server 30.

This technique reduces variance between the freshness of the perishable products FG identified by the land-based sensor 10S and the freshness of the perishable products FG identified by the sea-based sensor 20S. This facilitates management of the freshness of the perishable products FG based on the freshness of the perishable products FG identified at different times by the land-based sensor 10S and the sea-based sensor 20S.

Reference Signs List

| 1 | Perishable product management system |
| 10 | Land container |
| 20 | Sea container |
| 30 | Server |
| 301 | Acquisition section |
| 302 | Storage section |
| 303 | Control section |
| 304 | Display section |
| FG | Perishable product |

**Claims**

1. An adjustment system (1) comprising:

   a first acquisition unit (301) configured to acquire, from a first sensor (10S), condition information about a condition of a perishable product (FG) contained in an accommodation unit (10) configured to contain the perishable product, the first sensor being configured to identify the condition information;
   a second acquisition unit (301) configured to acquire, from a second sensor (20S), condition information about a condition of the perishable product (FG) contained in an accommodation unit (20), the second sensor being different from the first sensor and configured to be capable of identifying the condition information;
   an adjusting unit (303) configured to adjust at least one of first condition information and second condition information based on a predetermined criterion, the first condition information being about the condition information for the perishable product identified at a first time by the first sensor, the second condition information being about the condition information for the perishable product identified at a second time by the second sensor, the second time being different from the first time, wherein
   the adjusting unit (303) is configured to adjust the second condition information in an adjustment manner defined with respect to the first condition information,
   **characterized in that**
   a type of rating of the condition indicated by the condition information identified by the first sensor (10S) is different from a type of rating of the condition indicated by the condition information identified by the second sensor (20S),
   the adjusting unit (303) is configured to make the type of rating for the second condition information the same as the type of rating for the first condition information to perform the adjustment,
   the adjusting unit (303) is configured to replace the rating of the condition information with a corresponding rating of freshness, which is an overall rating of the condition of the perishable product (FG), before adjusting the second condition information, and
   the adjusting unit (303) is configured to adjust the second condition information so as to reduce difference between the freshness of the perishable product (FG) identified based on the condition information from the second sensor (20S) and the freshness of the perishable product (FG) identified based on the condition information from the first sensor (10S).

2. The adjustment system (1) according to claim 1, wherein the adjusting unit (303) is configured to adjust the second condition information according to the first condition information.

3. The adjustment system (1) according to claim 2, wherein the adjusting unit (303) is configured not to adjust the second condition information according to the first condition information when a predetermined criterion for relationship between the first condition information and the second condition information is not met.

4. The adjustment system (1) according to claim 3, wherein the predetermined criterion for the relationship requires that an interval between the first time and the second time be within a predetermined period.

5. The adjustment system (1) according to claim 1, further comprising a third acquisition unit configured to acquire, from a third sensor, condition information about a condition of the perishable product contained in the accommodation unit, the third sensor being different from the first sensor and the second sensor, the third sensor being configured to be capable of identifying the condition information, wherein
the adjusting unit is configured to:

   adjust the first condition information according to third condition information, the third condition information being identified for the perishable product by the third sensor at a third time, the third time being within a predetermined interval from the first time; and
   adjust the second condition information according to fourth condition information, the fourth condition information being identified for the perishable product by the third identification unit at a fourth time, the fourth time being within a predetermined interval from the second time.

6. The adjustment system (1) according to claim 5, wherein the perishable product (FG) is contained in a same accommodation unit at the first time and the third time, contained in another same accommodation unit at the second time and the fourth time, and contained in different accommodation units at the first time and the second time.

7. The adjustment system (2) according to claim 1, further comprising a third acquisition unit configured to acquire, from a plurality of sensors, condition information about a condition of a perishable product, the plurality of sensors each different from the first sensor and the second sensor, each of the plurality of sensors being configured to be capable of identifying the condition information, wherein
the adjusting unit (303) is configured to adjust the first condition information and the second condition information using a plurality of instances of condition information identified by the plurality of sensors.

8. The adjustment system (1) according to claim 7, wherein the adjusting unit is configured to:

   adjust the first condition information according to each condition information that is one of the plurality of instances of condition information identified by the plurality of sensors and meets a first criterion defined with respect to the first condition information; and
   adjust the second condition information according to each condition information that is one of the plurality of instances of condition information and meets a second criterion defined with respect to the second condition information.

9. The adjustment system (1) according to claim 8, wherein the first criterion is a criterion defined for a type of the perishable product (FG) pertaining to the first condition information and for a condition and/or environment of the perishable product at the first time, and
the second criterion is a criterion defined for a type of the perishable product pertaining to the second condition information and for a condition and/or environment of the perishable product at the second time.

10. An adjustment method comprising:

   a first acquisition step of acquiring, from a first sensor, condition information about a condition of a perishable product contained in an accommodation unit configured to contain the perishable product, the first sensor being configured to identify the condition information;
   a second acquisition step of acquiring, from a second sensor different from the first sensor, condition information about a condition of the perishable product contained in an accommodation unit, the second sensor being configured to be capable of identifying the condition information;
   an adjustment step of adjusting at least one of first condition information and second condition information based on a predetermined criterion, the first condition information being about the condition information for the perishable product identified at a first time by the first sensor, the second condition information being about the condition information for the perishable product identified at a second time by the second sensor, the second time being different from the first time, wherein
   the second condition information is adjusted in an adjustment manner defined with respect to the first condition information,
   **characterized in that**

a type of rating of the condition indicated by the condition information identified by the first sensor is different from a type of rating of the condition indicated by the condition information identified by the second sensor,

the type of rating for the second condition information is made the same as the type of rating for the first condition information to perform the adjustment,

the adjustment step replaces the rating of the condition information with a corresponding rating of freshness, which is an overall rating of the condition of the perishable product (FG), before adjusting the second condition information, and

the adjustment step adjusts the second condition information so as to reduce difference between the freshness of the perishable product (FG) identified based on the condition information from the second sensor (20S) and the freshness of the perishable product (FG) identified based on the condition information from the first sensor (10S).

**Patentansprüche**

1.  Einstellsystem (1), umfassend:

    eine erste Erfassungseinheit (301), die dazu ausgebildet ist, von einem ersten Sensor (10S) Zustandsinformation über einen Zustand eines verderblichen Produkts (FG), das in einer Unterbringungseinheit (10) enthalten ist, die dazu ausgebildet ist, das verderbliche Produkt zu enthalten, zu erfassen, wobei der erste Sensor dazu ausgebildet ist, die Zustandsinformation zu identifizieren;
    eine zweite Erfassungseinheit (301), die dazu ausgebildet ist, von einem zweiten Sensor (20S) Zustandsinformation über einen Zustand des verderblichen Produkts (FG), das in einer Unterbringungseinheit (20) enthalten ist, zu erfassen, wobei der zweite Sensor sich von dem ersten Sensor unterscheidet und dazu ausgebildet ist, die Zustandsinformation identifizieren zu können;
    eine Einstelleinheit (303), die dazu ausgebildet ist, mindestens eine der ersten Zustandsinformation und der zweiten Zustandsinformation basierend auf einem vorgegebenen Kriterium einzustellen, wobei die erste Zustandsinformation die Zustandsinformation für das verderbliche Produkt betrifft, die zu einem ersten Zeitpunkt durch den ersten Sensor identifiziert wird, wobei die zweite Zustandsinformation die Zustandsinformation für das verderbliche Produkt betrifft, die zu einem zweiten Zeitpunkt durch den zweiten Sensor identifiziert wird, wobei der zweite Zeitpunkt sich von dem ersten Zeitpunkt unterscheidet, wobei
    die Einstelleinheit (303) dazu ausgebildet ist, die zweite Zustandsinformation in einer Einstellungsweise einzustellen, die in Bezug auf die erste Zustandsinformation definiert ist,
    **dadurch gekennzeichnet, dass**
    eine Art der Bewertung des Zustands, der durch die vom ersten Sensor (10S) identifizierte Zustandsinformation angegeben ist, sich von einer Art der Bewertung des Zustands, der durch die vom zweiten Sensor (20S) identifizierte Zustandsinformation angegeben ist, unterscheidet,
    die Einstelleinheit (303) dazu ausgebildet ist, die Art der Bewertung für die zweite Zustandsinformation mit der Art der Bewertung für die erste Zustandsinformation gleich zu machen, um die Einstellung auszuführen,
    die Einstelleinheit (303) dazu ausgebildet ist, die Bewertung der Zustandsinformation durch eine entsprechende Frischebewertung zu ersetzen, welche eine Gesamtbewertung des Zustands des verderblichen Produkts (FG) ist, bevor die zweite Zustandsinformation eingestellt wird, und
    die Einstelleinheit (303) dazu ausgebildet ist, die zweite Zustandsinformation so einzustellen, dass eine Differenz zwischen der Frische des verderblichen Produkts (FG), die basierend auf der Zustandsinformation von dem zweiten Sensor (20S) identifiziert wird, und der Frische des verderblichen Produkts (FG), die basierend auf der Zustandsinformation von dem ersten Sensor (10S) identifiziert wird, verringert wird.

2.  Einstellsystem (1) nach Anspruch 1, wobei die Einstelleinheit (303) dazu ausgebildet ist, die zweite Zustandsinformation entsprechend der ersten Zustandsinformation einzustellen.

3.  Einstellsystem (1) nach Anspruch 2, wobei die Einstelleinheit (303) dazu ausgebildet ist, die zweite Zustandsinformation nicht entsprechend der ersten Zustandsinformation einzustellen, wenn ein vorgegebenes Kriterium für die Beziehung zwischen der ersten Zustandsinformation und der zweiten Zustandsinformation nicht erfüllt ist.

4.  Einstellsystem (1) nach Anspruch 3, wobei das vorgegebene Kriterium für die Beziehung erfordert, dass ein Abstand zwischen dem ersten Zeitpunkt und dem zweiten Zeitpunkt innerhalb eines vorgegebenen Zeitraums liegt.

5.  Einstellsystem (1) nach Anspruch 1, das weiter eine dritte Erfassungseinheit umfasst, die dazu ausgebildet ist, von einem dritten Sensor Zustandsinformation über einen Zustand des in der Unterbringungseinheit enthaltenen verderblichen Produkts zu erfassen, wobei der dritte Sensor sich von dem ersten Sensor und dem zweiten Sensor unterscheidet, wobei der dritte Sensor dazu ausgebildet ist, die Zustandsinformation identifizieren zu können, wobei die Einstelleinheit dazu ausgebildet ist:

die erste Zustandsinformation entsprechend der dritten Zustandsinformation einzustellen, wobei die dritte Zustandsinformation für das verderbliche Produkt durch den dritten Sensor zu einem dritten Zeitpunkt identifiziert wird, wobei der dritte Zeitpunkt innerhalb eines vorgegebenen Intervalls ab dem ersten Zeitpunkt liegt; und die zweite Zustandsinformation entsprechend der vierten Zustandsinformation einzustellen, wobei die vierte Zustandsinformation für das verderbliche Produkt durch die dritte Identifikationseinheit zu einem vierten Zeitpunkt identifiziert wird, wobei der vierte Zeitpunkt innerhalb eines vorgegebenen Intervalls ab dem zweiten Zeitpunkt liegt.

6. Einstellsystem (1) nach Anspruch 5, wobei das verderbliche Produkt (FG) zum ersten Zeitpunkt und zum dritten Zeitpunkt in derselben Unterbringungseinheit enthalten ist, zum zweiten und zum vierten Zeitpunkt in einer anderen derselben Unterbringungseinheit enthalten ist, und zum ersten Zeitpunkt und zum zweiten Zeitpunkt in unterschiedlichen Unterbringungseinheiten enthalten ist.

7. Einstellsystem (2) nach Anspruch 1, das weiter eine dritte Erfassungseinheit umfasst, die dazu ausgebildet ist, von einer Vielzahl von Sensoren Zustandsinformation über einen Zustand eines verderblichen Produkts zu erfassen, wobei die Vielzahl von Sensoren sich jeweils von dem ersten Sensor und dem zweiten Sensor unterscheidet, wobei jeder der Vielzahl von Sensoren dazu ausgebildet ist, die Zustandsinformation identifizieren zu können, wobei die Einstelleinheit (303) dazu ausgebildet ist, die erste Zustandsinformation und die zweite Zustandsinformation unter Verwendung einer Vielzahl von Instanzen von Zustandsinformation einzustellen, die durch die Vielzahl von Sensoren identifiziert sind.

8. Einstellsystem (1) nach Anspruch 7, wobei die Einstelleinheit dazu ausgebildet ist:

die erste Zustandsinformation entsprechend jeder Zustandsinformation einzustellen, die eine der Vielzahl von Instanzen von Zustandsinformation ist, die durch die Vielzahl von Sensoren identifiziert sind, und die ein erstes Kriterium erfüllt, das in Bezug auf die erste Zustandsinformation definiert ist; und die zweite Zustandsinformation entsprechend jeder Zustandsinformation einzustellen, die eine der Vielzahl von Instanzen von Zustandsinformation ist, und die ein zweites Kriterium erfüllt, das in Bezug auf die zweite Zustandsinformation definiert ist.

9. Einstellsystem (1) nach Anspruch 8, wobei das erste Kriterium ein Kriterium ist, das für eine Art des verderblichen Produkts (FG), die die erste Zustandsinformation betrifft, und für einen Zustand und/oder eine Umgebung des verderblichen Produkts zum ersten Zeitpunkt definiert ist, und das zweite Kriterium ein Kriterium ist, das für eine Art des verderblichen Produkts, die die zweite Zustandsinformation betrifft, und für einen Zustand und/oder eine Umgebung des verderblichen Produkts zum zweiten Zeitpunkt definiert ist.

10. Einstellverfahren, umfassend:

einen ersten Erfassungsschritt des Erfassens, von einem ersten Sensor, von Zustandsinformation über einen Zustand eines verderblichen Produkts, das in einer Unterbringungseinheit enthalten ist, die dazu ausgebildet ist, das verderbliche Produkt zu enthalten, wobei der erste Sensor dazu ausgebildet ist, die Zustandsinformation zu identifizieren; einen zweiten Erfassungsschritt des Erfassens, von einem zweiten Sensor, der sich von dem ersten Sensor unterscheidet, von Zustandsinformation über einen Zustand des in einer Unterbringungseinheit enthaltenen verderblichen Produkts, wobei der zweite Sensor dazu ausgebildet ist, die Zustandsinformation identifizieren zu können; einen Einstellschritt des Einstellens mindestens einer der ersten Zustandsinformation und der zweiten Zustandsinformation basierend auf einem vorgegebenen Kriterium, wobei die erste Zustandsinformation die Zustandsinformation für das verderbliche Produkt betrifft, die zu einem ersten Zeitpunkt durch den ersten Sensor identifiziert wird, wobei die zweite Zustandsinformation die Zustandsinformation für das verderbliche Produkt betrifft, die zu einem zweiten Zeitpunkt durch den zweiten Sensor identifiziert wird, wobei der zweite Zeitpunkt sich von dem ersten Zeitpunkt unterscheidet, wobei die zweite Zustandsinformation in einer Einstellungsweise eingestellt wird, die in Bezug auf die erste Zustandsinformation definiert ist,

**dadurch gekennzeichnet, dass**

eine Art der Bewertung des Zustands, der durch die vom ersten Sensor identifizierte Zustandsinformation angegeben ist, sich von einer Art der Bewertung des Zustands, der durch die vom zweiten Sensor identifizierte Zustandsinformation angegeben ist, unterscheidet,

die Art der Bewertung für die zweite Zustandsinformation mit der Art der Bewertung für die erste Zustandsinformation gleich gemacht wird, um die Einstellung auszuführen,

der Einstellschritt die Bewertung der Zustandsinformation durch eine entsprechende Frischebewertung ersetzt, welche eine Gesamtbewertung des Zustands des verderblichen Produkts (FG) ist, bevor die zweite Zustandsinformation eingestellt wird, und

der Einstellschritt die zweite Zustandsinformation so einstellt, dass eine Differenz zwischen der Frische des verderblichen Produkts (FG), die basierend auf der Zustandsinformation von dem zweiten Sensor (20S) identifiziert wird, und der Frische des verderblichen Produkts (FG), die basierend auf der Zustandsinformation von dem ersten Sensor (10S) identifiziert wird, verringert wird.

## Revendications

1. Système d'ajustement (1) comprenant :

une première unité d'acquisition (301) configurée pour acquérir, à partir d'un premier capteur (10S), des informations relatives à l'état concernant un état d'un produit périssable (FG) contenu dans une unité d'hébergement (10) configurée pour contenir le produit périssable, le premier capteur étant configuré pour identifier les informations relatives à l'état ;

une deuxième unité d'acquisition (301) configurée pour acquérir, à partir d'un deuxième capteur (20S), des informations relatives à l'état concernant un état du produit périssable (FG) contenu dans une unité d'hébergement (20), le deuxième capteur étant différent du premier capteur et configuré de manière à être apte à identifier les informations relatives à l'état ;

une unité d'ajustement (303) configurée pour

ajuster au moins une série d'informations parmi les premières informations relatives à l'état et les deuxièmes informations relatives à l'état sur la base d'un critère prédéterminé, les premières informations relatives à l'état concernant les informations relatives à l'état pour le produit périssable identifiées à un premier instant par le premier capteur, les deuxièmes informations relatives à l'état étant relatives concernant les informations relatives à l'état pour le produit périssable identifiées à un deuxième instant par le deuxième capteur, le deuxième instant étant différent du premier instant, dans lequel

l'unité d'ajustement (303) est configurée pour ajuster les deuxièmes informations relatives à l'état selon un mode d'ajustement défini par rapport aux premières informations relatives à l'état,

**caractérisé en ce que**

un type d'indice de l'état indiqué par les informations relatives à l'état identifiées par le premier capteur (10S) est différent d'un type d'indice de l'état indiqué par les informations relatives à l'état identifiées par le deuxième capteur (20S),

l'unité d'ajustement (303) est configurée pour rendre le type d'indice pour les deuxièmes informations relatives à l'état identique au type d'indice pour les premières informations relatives à l'état afin d'effectuer l'ajustement,

l'unité d'ajustement (303) est configurée pour remplacer l'indice des informations relatives à l'état par un indice de fraîcheur correspondant, qui est un indice global de l'état du produit périssable (FG), avant d'ajuster les deuxièmes informations relatives à l'état, et

l'unité d'ajustement (303) est configurée pour ajuster les deuxièmes informations relatives à l'état de façon à réduire une différence entre la fraîcheur du produit périssable (FG) identifiée sur la base des informations relatives à l'état provenant du deuxième capteur (20S) et la fraîcheur du produit périssable (FG) identifiée sur la base des informations relatives à l'état provenant du premier capteur (10S).

2. Système d'ajustement (1) selon la revendication 1, dans lequel l'unité d'ajustement (303) est configurée pour ajuster les deuxièmes informations relatives à l'état selon les premières informations relatives à l'état.

3. Système d'ajustement (1) selon la revendication 2, dans lequel l'unité d'ajustement (303) est configurée pour ne pas ajuster les deuxièmes informations relatives à l'état selon les premières informations relatives à l'état lorsqu'un critère prédéterminé pour une relation entre les premières informations relatives à l'état et les deuxièmes informations relatives à l'état n'est pas satisfait.

4. Système d'ajustement (1) selon la revendication 3, dans lequel le critère prédéterminé pour la relation exige qu'un intervalle entre le premier instant et le deuxième instant soit dans une période prédéterminée.

5. Système d'ajustement (1) selon la revendication 1, comprenant en outre une troisième unité d'acquisition configurée pour acquérir, à partir d'un troisième capteur, des informations relatives à l'état concernant un état du produit périssable contenu dans l'unité d'hébergement, le troisième capteur étant différent du premier capteur et du deuxième capteur, le troisième capteur étant configuré de manière à être apte à identifier les informations relatives à l'état, dans lequel
l'unité d'ajustement est configurée pour :

   ajuster les premières informations relatives à l'état selon des troisièmes informations relatives à l'état, les troisièmes informations relatives à l'état étant identifiées pour le produit périssable par le troisième capteur à un troisième instant, le troisième instant étant dans un intervalle prédéterminé à compter du premier instant ; et
   ajuster les deuxièmes informations relatives à l'état selon des quatrièmes informations relatives à l'état, les quatrièmes informations relatives à l'état étant identifiées pour le produit périssable par la troisième unité d'identification à un quatrième instant, le quatrième instant étant dans un intervalle prédéterminé à compter du deuxième instant.

6. Système d'ajustement (1) selon la revendication 5, dans lequel le produit périssable (FG) est contenu dans une même unité d'hébergement au premier instant et au troisième instant, contenu dans une autre même unité d'hébergement au deuxième instant et au quatrième instant, et contenu dans différentes unités d'hébergement au premier instant et au deuxième instant.

7. Système d'ajustement (2) selon la revendication 1, comprenant en outre une troisième unité d'acquisition configurée pour acquérir, à partir d'une pluralité de capteurs, des informations relatives à l'état concernant un état d'un produit périssable, la pluralité de capteurs étant chacun différent du premier capteur et du deuxième capteur, chacun de la pluralité de capteurs étant configuré de manière à être apte à identifier les informations relatives à l'état, dans lequel l'unité d'ajustement (303) est configurée pour ajuster les premières informations relatives à l'état et les deuxièmes informations relatives à l'état en utilisant une pluralité d'instances d'informations relatives à l'état identifiées par la pluralité de capteurs.

8. Système d'ajustement (1) selon la revendication 7, dans lequel l'unité d'ajustement est configurée pour :

   ajuster les premières informations relatives à l'état selon chacune des informations relatives à l'état qui est une instance parmi la pluralité d'instances d'informations relatives à l'état identifiées par la pluralité de capteurs et satisfait un premier critère défini par rapport aux premières informations relatives à l'état ; et
   ajuster les deuxièmes informations relatives à l'état selon chacune des informations relatives à l'état qui est une instance parmi la pluralité d'instances d'informations relatives à l'état et satisfait un deuxième critère défini par rapport aux deuxièmes informations relatives à l'état.

9. Système d'ajustement (1) selon la revendication 8, dans lequel le premier critère est un critère défini pour un type du produit périssable (FG) se rapportant aux premières informations relatives à l'état et pour un état et/ou environnement du produit périssable au premier instant, et
le deuxième critère est un critère défini pour un type du produit périssable se rapportant aux deuxièmes informations relatives à l'état et pour un état et/ou environnement du produit périssable au deuxième instant.

10. Procédé d'ajustement comprenant :

   une première étape d'acquisition consistant à acquérir, à partir d'un premier capteur, des informations relatives à l'état concernant un état d'un produit périssable contenu dans une unité d'hébergement configurée pour contenir le produit périssable, le premier capteur étant configuré pour identifier les informations relatives à l'état ;
   une deuxième étape d'acquisition consistant à acquérir, à partir d'un deuxième capteur différent du premier capteur, des informations relatives à l'état concernant un état du produit périssable contenu dans une unité d'hébergement, le deuxième capteur étant configuré de manière à être apte à identifier les informations relatives à l'état ;
   une étape d'ajustement consistant à ajuster au moins une série d'informations parmi les premières informations relatives à l'état et les deuxièmes informations relatives à l'état sur la base d'un critère prédéterminé, les premières informations relatives à l'état étant relatives aux informations relatives à l'état pour le produit périssable identifiées à un premier instant par le premier capteur, les deuxièmes informations relatives à l'état étant relatives aux informations relatives à l'état pour le produit périssable identifiées à un deuxième instant par le deuxième capteur, le deuxième instant étant différent du premier instant, dans lequel

les deuxièmes informations relatives à l'état sont ajustées selon un mode d'ajustement défini par rapport aux premières informations relatives à l'état,

**caractérisé en ce que**

un type d'indice de l'état indiqué par les informations relatives à l'état identifiées par le premier capteur est différent d'un type d'indice de l'état indiqué par les informations relatives à l'état identifiées par le deuxième capteur,

le type d'indice pour les deuxièmes informations relatives à l'état est rendu identique au type d'indice pour les premières informations relatives à l'état afin d'effectuer l'ajustement,

l'étape d'ajustement remplace l'indice des informations relatives à l'état par un indice de fraîcheur correspondant, qui est un indice global de l'état du produit périssable (FG), avant d'ajuster les deuxièmes informations relatives à l'état, et

l'étape d'ajustement ajuste les deuxièmes informations relatives à l'état de façon à réduire une différence entre la fraîcheur du produit périssable (FG) identifiée sur la base des informations relatives à l'état provenant du deuxième capteur (20S) et la fraîcheur du produit périssable (FG) identifiée sur la base des informations relatives à l'état provenant du premier capteur (10S).

EP 4 131 102 B1

# FIG.1

FIG.2

CPU 30a

MEMORY 30c

SYSTEM CONTROLLER 30b

DISPLAY MECHANISM 30d

NETWORK INTERFACE 30f

BRIDGE CONTROLLER 30e

NON-VOLATILE RECORDING DEVICE 30g

INPUT DEVICE 30i

VOICE MECHANISM 30h

30

EP 4 131 102 B1

FIG.3

30

ACQUISITION
SECTION
301

STORAGE
SECTION
302

CONTROL
SECTION
303

DISPLAY
SECTION
304

FIG.4

| SENSOR TYPE | SENSOR IDENTIFICATION INFORMATION | IDENTIFICATION TARGET | CONDITION INFORMATION | IDENTIFICATION TIME |
|---|---|---|---|---|
| COLOR SENSOR | 10S−1 | A-1 | B | 13:30 |
| COLOR SENSOR | 10S−1 | A-1 | B | 14:00 |
| COLOR SENSOR | 10S−1 | A-1 | B | 14:30 |
| COLOR SENSOR | 10S−1 | A-1 | B | 15:00 |
| ODOR SENSOR | 20S−1 | A-1 | e | 15:30 |
| ... | ... | ... | ... | ... |

EP 4 131 102 B1

# FIG.5

| SENSOR TYPE | RATINGS | | | | | | | | | | | | | | | | | | | |
|---|---|---|---|---|---|---|---|---|---|---|---|---|---|---|---|---|---|---|---|---|
| COLOR SENSOR | A | | B | | C | | D | | E | | F | | G | | H | | I | | J | |
| ODOR SENSOR | a | b | c | d | e | f | g | h | i | j | k | l | m | n | o | p | q | r | s | t |
| BIOSENSOR | aa | | bb | | cc | | dd | | ff | | gg | | hh | | ii | | jj | | kk | |
| ... | ... | ... | ... | ... | ... | ... | ... | ... | ... | ... | ... | ... | ... | ... | ... | ... | ... | ... | ... | ... |
| FRESHNESS | 10 | | 9 | | 8 | | 7 | | 6 | | 5 | | 4 | | 3 | | 2 | | 1 | |

EP 4 131 102 B1

FIG.6

```
                    ┌─────────────────┐
                    │     START       │
                    └─────────────────┘
                             │
                             ▼           S101
        YES ◄──────◄ ADJUSTED? ◄─────────
                             │
                             │ NO
                             ▼           S102
                     RELATED TO          NO
                  SAME PRODUCTS? ─────────────────────────┐
                             │                            │
                             │ YES                        │
                             ▼           S103             │
                  WITHIN ADJUSTMENT      NO                │
                       PERIOD? ──────────────────────────►│
                             │                            │
                             │ YES                        │
                             ▼           S104             │
                  WITHIN ADJUSTMENT      NO                │
                        RANGE? ──────────────────────────►│
                             │                            │
                             │ YES                        │
                             ▼                            │
      ┌────────────────────────────────────────────┐     │
      │ MATCH LATEST CONDITION INFORMATION WITH     │ S105│
      │  COMPARATIVE CONDITION INFORMATION          │     │
      └────────────────────────────────────────────┘     │
                             │                            │
                             │         S106          S107 ▼
                             ▼                   ┌──────────────────────────┐
                ┌─────────────────────┐         │ DISPLAY CONDITION         │
                │   DISPLAY ADJUSTED  │         │ INFORMATION WITHOUT       │
                │ CONDITION INFORMATION│        │ ADJUSTING IT              │
                └─────────────────────┘         └──────────────────────────┘
                             │                            │
                             ▼◄───────────────────────────┘
                    ┌─────────────────┐
                    │      END        │
                    └─────────────────┘
```

## FIG.7A

| SENSOR IDENTIFICATION INFORMATION | ADJUSTMENT FACTOR |
|---|---|
| 10S-1 | - |
| 20S-1 | 1 |
| ... | ... |

## FIG.7B

41  40  441  30d

FRESHNESS INFORMATION

42 — TYPE OF PERISHABLE PRODUCTS : TOMATOES
43 — PERISHABLE PRODUCT IDENTIFICATION INFORMATION: A-1

● : COLOR SENSOR
▲ : ODOR SENSOR (ADJUSTED)
△ : ODOR SENSOR (UNADJUSTED)

44

FRESHNESS

10
9
8
7
6
5
4
3
2
1
0

0   13:30   14:00   14:30   15:00   15:30

TIME

EP 4 131 102 B1

FIG.8

EP 4 131 102 B1

FIG.9

| SENSOR TYPE | SENSOR IDENTIFICATION INFORMATION | IDENTIFICATION TARGET | CONDITION INFORMATION | IDENTIFICATION TIME |
|---|---|---|---|---|
| BIOSENSOR | SS | A-1 | bb | 13:20 |
| BIOSENSOR | SS | A-1 | cc | 14:20 |
| BIOSENSOR | SS | A-1 | cc | 15:20 |
| COLOR SENSOR | 10S−1 | A-1 | A | 13:30 |
| COLOR SENSOR | 10S−1 | A-1 | A | 14:00 |
| COLOR SENSOR | 10S−1 | A-1 | B | 14:30 |
| COLOR SENSOR | 10S−1 | A-1 | B | 15:00 |
| ODOR SENSOR | 20S−1 | A-1 | g | 15:30 |
| ... | ... | ... | ... | ... |

EP 4 131 102 B1

FIG.10

```
                    ┌─────────────────┐
                    │      START      │
                    └─────────────────┘
                             │
                             ▼              S201
   YES              ◇─────────────────◇
  ◄─────────────────    ADJUSTED?     
                    ◇─────────────────◇
                             │ NO
                             ▼              S202
                    ◇─────────────────◇    NO
                    │   RELATED TO     │────────────┐
                    │ SAME PRODUCTS?   │            │
                    ◇─────────────────◇             │
                             │ YES                  │
                             ▼              S203     │
                    ◇─────────────────◇    NO        │
                    │ WITHIN ADJUSTMENT│─────────┐   │
                    │     PERIOD?      │         │   │
                    ◇─────────────────◇          │   │
                             │ YES               │   │
                             ▼                    │   │
   ┌──────────────────────────────────────┐      │   │
   │  MATCH LATEST CONDITION INFORMATION   │  S204 │   │
   │  WITH CONDITION INFORMATION FROM      │       │   │
   │        REFERENCE SENSOR               │       │   │
   └──────────────────────────────────────┘       │   │
                             │              S206   │   │
                             │                      │   │
                             ▼         S205         ▼   ▼
                    ┌──────────────────┐   ┌──────────────────────────┐
                    │ DISPLAY ADJUSTED │   │ DISPLAY CONDITION         │
                    │ CONDITION        │   │ INFORMATION               │
                    │ INFORMATION      │   │ WITHOUT ADJUSTING IT      │
                    └──────────────────┘   └──────────────────────────┘
                             │                      │
                             ▼◄─────────────────────┘
                    ┌─────────────────┐
                    │       END       │
                    └─────────────────┘
```

## FIG.11A

| SENSOR IDENTIFICATION INFORMATION | ADJUSTMENT FACTOR |
|---|---|
| 10S-1 | -1 |
| 20S-1 | 1 |
| ... | ... |

## FIG.11B

FRESHNESS INFORMATION

TYPE OF PERISHABLE PRODUCTS
: TOMATOES
PERISHABLE PRODUCT
IDENTIFICATION INFORMATION: A-1

● : COLOR SENSOR (ADJUSTED)
○ : COLOR SENSOR (UNADJUSTED)
▲ : ODOR SENSOR (ADJUSTED)
△ : ODOR SENSOR (UNADJUSTED)

FRESHNESS (y-axis: 0–10)

TIME (x-axis: 13:30, 14:00, 14:30, 15:00, 15:30)

EP 4 131 102 B1

FIG.12

EP 4 131 102 B1

37

FIG.13

| SENSOR TYPE | SENSOR IDENTIFICATION INFORMATION | IDENTIFI-CATION TARGET | CONDITION INFORMA-TION | IDENTIFI-CATION TIME |
|---|---|---|---|---|
| COLOR SENSOR | 10S−1 | A-1 | A | 14:00 |
| ODOR SENSOR | 10S−2 | B-1 | c | 14:00 |
| ... | ... | ... | ... | ... |
| BIOSENSOR | 10S−X | X-1 | aa | 14:00 |
| COLOR SENSOR | 10S−1 | A-1 | B | 14:30 |
| ODOR SENSOR | 10S−2 | B-1 | d | 14:30 |
| ... | ... | ... | ... | ... |
| BIOSENSOR | 10S−X | X-1 | bb | 14:30 |
| COLOR SENSOR | 10S−1 | A-1 | B | 15:00 |
| ODOR SENSOR | 10S−2 | B-1 | d | 15:00 |
| ... | ... | ... | ... | ... |
| BIOSENSOR | 10S−X | X-1 | bb | 15:00 |
| ODOR SENSOR | 20S−1 | A-1 | c | 15:30 |
| ODOR SENSOR | 20S−2 | B-1 | d | 15:30 |
| ... | ... | ... | ... | ... |
| COLOR SENSOR | 20S−X | X-1 | bb | 15:30 |
| ODOR SENSOR | 20S−1 | A-1 | d | 16:00 |
| ODOR SENSOR | 20S−2 | B-1 | d | 16:00 |
| ... | ... | ... | ... | ... |
| COLOR SENSOR | 20S−X | X-1 | cc | 16:00 |
| ... | ... | ... | ... | ... |

FIG.14B

| SENSOR IDENTIFICATION INFORMATION | DISTRIBUTION STAGE |
|---|---|
| 10S-1 | TRUCK |
| 10S-2 | |
| ... | |
| 10S-X | |
| 20S-1 | SHIP |
| 20S-2 | |
| ... | |
| 20S-X | |
| ... | ... |

FIG.14A

| IDENTIFICATION TARGET | PERISHABLE PRODUCT TYPE |
|---|---|
| A-1 | TOMATES |
| B-1 | |
| ... | |
| X-1 | |
| A-2 | CABBAGES |
| B-2 | |
| ... | |
| X-2 | |
| A-3 | BANANAS |
| B-3 | |
| ... | |
| X-3 | |
| ... | ... |

FIG.15

```
                    ┌──────────────────┐
                    │      START       │
                    └──────────────────┘
                              │
                              ▼          S301
              ┌─────────────────────────────┐
       YES    │        ADJUSTED?            │
    ◄─────────┤                             │
              └─────────────────────────────┘
    │                       │ NO
    │                       ▼          S302
    │         ┌─────────────────────────────┐      NO
    │         │   MEET ADJUSTMENT           ├──────────────┐
    │         │      CRITERIA?              │              │
    │         └─────────────────────────────┘              │
    │                       │ YES                          │
    │                       ▼                              │
    │      ┌──────────────────────────────────────┐        │
    │      │  ADJUST EACH OF LATEST CONDITION     │  S303   │
    │      │INFORMATION AND CONDITION INFORMATION TO       │
    │      │           BE ADJUSTED                │        │
    │      └──────────────────────────────────────┘        │
    │                       │                              │
    │          S304         │                    S305      │
    │                       ▼                              ▼
    │      ┌───────────────────────┐    ┌───────────────────────────────┐
    └─────►│   DISPLAY ADJUSTED    │    │ DISPLAY CONDITION INFORMATION │
           │ CONDITION INFORMATION │    │      WITHOUT ADJUSTING IT      │
           └───────────────────────┘    └───────────────────────────────┘
                       │                              │
                       ▼                              │
           ┌───────────────────────┐◄─────────────────┘
           │         END           │
           └───────────────────────┘
```

FIG.16

**EP 4 131 102 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019516162 W
- US 2016063433 A1
- US 2014055244 A1
- US 2011029413 A1